# EUROPEAN PATENT SPECIFICATION

(11) **EP 4 233 455 B1**
(45) Date of publication and mention of the grant of the patent: **24.06.2026**
(21) Application number: 21883153.5
(22) Date of filing: 18.10.2021
(51) Int. Cl.: H04W 72/12, H04W 74/08, H04W 92/10, H04W 92/18, H04W 76/18, H04B 7/06, H04W 72/21, H04W 74/0808, H04W 76/19

(54) **METHOD AND APPARATUS FOR HANDLING RESOURCE COLLISION IN WIRELESS COMMUNICATION SYSTEM**
VERFAHREN UND VORRICHTUNG ZUR HANDHABUNG VON RESSOURCENKOLLISIONEN IN EINEM DRAHTLOSKOMMUNIKATIONSSYSTEM
PROCÉDÉ ET APPAREIL DE GESTION DE COLLISION DE RESSOURCES DANS UN SYSTÈME DE COMMUNICATION SANS FIL

(30) Priority: 22.10.2020 KR 20200137621; 22.10.2020 KR 20200137622
(43) Date of publication of application: 30.08.2023
(73) Proprietor: LG Electronics Inc., Yeongdeungpo-gu Seoul, 07336 (KR)
(72) Inventor: LEE, Youngdae, Seoul 06772 (KR); LEE, Seungmin, Seoul 06772 (KR)
(74) Representative: Frenkel, Matthias Alexander
(86) International application number: PCT/KR2021/014472
(87) International publication number: WO 2022/086082

(56) References cited:
- WO-A1-2017/171325
- WO-A1-2019/096394
- WO-A1-2020/092359
- US-A1- 2018 124 831
- "3rd Generation Partnership Project; Technical Specification Group Radio Access Network; NR; Medium Access Control (MAC) protocol specification (Release 16)", 5 October 2020 (2020-10-05), XP052353454, Retrieved from the Internet <URL:https://ftp.3gpp.org/tsg_ran/WG2_RL2/Specifications/202009_final_specs_after_RAN_89/38321-g21.zip 38321-g21.docx> [retrieved on 20201005]
- LG ELECTRONICS INC (RAPPORTEUR): "Discussion of [AT111-e][706][V2X] Corrections for prioritization (LG for discussion and MAC CR, Vivo for RRC CR)", vol. RAN WG2, no. Online; 20200817 - 20200828, 1 September 2020 (2020-09-01), XP052361396, Retrieved from the Internet <URL:https://ftp.3gpp.org/tsg_ran/WG2_RL2/TSGR2_111-e/Docs/R2-2008336.zip R2-2008336_Report of 111-e_V2X MAC Issues.doc> [retrieved on 20200901]
- "3rd Generation Partnership Project; Technical Specification Group Radio Access Network; NR; Medium Access Control (MAC) protocol specification (Release 16)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V16.2.1, 5 October 2020 (2020-10-05), Mobile Competence Centre ; 650, route des Lucioles ; F-06921 Sophia-Antipolis Cedex ; France , pages 1 - 154, XP051961393

## Description

### TECHNICAL FIELD

The present disclosure relates to handling resource collision in wireless communications.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

To perform a transmission in wireless communications, resource may be required. UE may perform a transmission based on resources allocated from a network, or reserved by the UE. UE may perform a first transmission on a first resource, and a second transmission on a second resource. However, the first resource and the second resource may collide each other. In this case, the UE may not perform both of the first transmission and the second transmission.

Prior art is found in "3^{rd} Generation Partnership Project; Technical Specification Group Radio Access Network; NR; Medium Access Control (MAC) protocol specification (Release 16)", F-06921.

### SUMMARY

The invention is set out in the independent claim. Preferred embodiments of the invention are set out in the dependent claims.

An aspect of the present disclosure is to provide method and apparatus for handling a resource collision in wireless communications.

Another aspect of the present disclosure is to provide method and apparatus for handling a resource collision between sidelink resources and access link resources in wireless communications.

Yet another aspect of the present disclosure is to provide method and apparatus for handling a resource collision between sidelink resources and PUCCH resources for SR in wireless communications.

According to an embodiment of the present disclosure, a method performed by a wireless device in a wireless communication system comprises: detecting a failure related to at least one of a listen-before-talk (LBT) failure or a beam failure; triggering a scheduling request (SR) for the failure; and based on that a first resource for a transmission of the SR for the failure overlaps with a second resource for a sidelink transmission: transmitting, to a network, the SR for the failure on the first resource; and dropping the sidelink transmission on the second resource.

According to an embodiment of the present disclosure, a wireless device in a wireless communication system comprises: a transceiver; a memory; and at least one processor operatively coupled to the transceiver and the memory, and configured to: detect a failure related to at least one of a listen-before-talk (LBT) failure or a beam failure, trigger a scheduling request (SR) for the failure, and based on that a first resource for a transmission of the SR for the failure overlaps with a second resource for a sidelink transmission: control the transceiver to transmit, to a network, the SR for the failure on the first resource; and drop the sidelink transmission on the second resource.

According to an embodiment of the present disclosure, a processor for a wireless device in a wireless communication system wherein a memory of the wireless device stores a software code which implements instructions that, when executed by the processor, perform operations comprising: detecting a failure related to at least one of a listen-before-talk (LBT) failure or a beam failure; triggering a scheduling request (SR) for the failure; and based on that a first resource for a transmission of the SR for the failure overlaps with a second resource for a sidelink transmission: transmitting, to a network, the SR for the failure on the first resource; and dropping the sidelink transmission on the second resource.

According to an embodiment of the present disclosure, a non-transitory computer-readable medium has stored thereon a plurality of instructions. The plurality of instructions, when executed by a processor of a wireless device, cause the wireless device to: detect a failure related to at least one of a listen-before-talk (LBT) failure or a beam failure; trigger a scheduling request (SR) for the failure; and based on that a first resource for a transmission of the SR for the failure overlaps with a second resource for a sidelink transmission: transmit, to a network, the SR for the failure on the first resource; and drop the sidelink transmission on the second resource.

According to an embodiment of the present disclosure, a method performed by a base station (BS) in a wireless communication system comprises: receiving, from a wireless device on a first resource, a scheduling request (SR) triggered for a failure related to at least one of a listen-before-talk (LBT) failure or a beam failure; after receiving the SR for the failure from the wireless device, transmitting an uplink grant to the wireless device; and receiving, from the wireless device, information informing the failure based on the uplink grant, wherein, based on that the first resource for a reception of the SR for the failure overlaps with a second resource for a sidelink transmission: the SR for the failure is received from the wireless device on the first resource; and the sidelink transmission on the second resource is dropped.

According to an embodiment of the present disclosure, a base station (BS) in a wireless communication system comprises: a transceiver; a memory; and at least one processor operatively coupled to the transceiver and the memory, and configured to control the transceiver to: receive, from a wireless device on a first resource, a scheduling request (SR) triggered for a failure related to at least one of a listen-before-talk (LBT) failure or a beam failure, after receiving the SR for the failure from the wireless device, transmit an uplink grant to the wireless device, and receive, from the wireless device, information informing the failure based on the uplink grant, wherein, based on that the first resource for a reception of the SR for the failure overlaps with a second resource for a sidelink transmission: the SR for the failure is received from the wireless device on the first resource; and the sidelink transmission on the second resource is dropped.

The present disclosure can have various advantageous effects.

For example, priority between SR transmission triggered for beam failure recovery and sidelink transmission can be clearly determined.

For example, priority between SR transmission triggered for LBT failures and sidelink transmission can be clearly determined.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows examples of 5G usage scenarios to which the technical features of the present disclosure can be applied.
FIG. 2 shows an example of a wireless communication system to which the technical features of the present disclosure can be applied.
FIG. 3 shows an example of a wireless communication system to which the technical features of the present disclosure can be applied.
FIG. 4 shows another example of a wireless communication system to which the technical features of the present disclosure can be applied.
FIG. 5 shows a block diagram of a user plane protocol stack to which the technical features of the present disclosure can be applied.
FIG. 6 shows a block diagram of a control plane protocol stack to which the technical features of the present disclosure can be applied.
FIG. 7 illustrates a frame structure in a 3GPP based wireless communication system.
FIG. 8 illustrates a data flow example in the 3GPP NR system.
FIG. 9 shows an example of a method for a BFR to which technical features of the present disclosure can be applied.
FIG. 10 shows an example of a method for a LBT failure recovery to which technical features of the present disclosure can be applied.
FIG. 11 shows an example of communication links to which technical features of the present disclosure can be applied.
FIG. 12 shows an example of sidelink channel mapping to which technical features of the present disclosure can be applied.
FIG. 13 shows an example of a method performed by a wireless device according to an embodiment of the present disclosure.
FIG. 14 shows an example of a method performed by a BS according to an embodiment of the present disclosure.
FIG. 15 shows an example of a procedure for prioritizing a transmission of SR triggered for BFR over SL transmission according to an embodiment of the present disclosure.
FIG. 16 shows an example of a procedure for prioritizing a transmission of SR triggered for LBT failures over SL transmission according to an embodiment of the present disclosure.
FIG. 17 shows a UE to implement an embodiment of the present disclosure.
FIG. 18 shows another example of a wireless communication system to which the technical features of the present disclosure can be applied.
FIG. 19 shows an example of an AI device to which the technical features of the present disclosure can be applied.
FIG. 20 shows an example of an AI system to which the technical features of the present disclosure can be applied.

### DETAILED DESCRIPTION

The technical features described below may be used by a communication standard by the 3rd generation partnership project (3GPP) standardization organization, a communication standard by the institute of electrical and electronics engineers (IEEE), etc. For example, the communication standards by the 3GPP standardization organization include long-term evolution (LTE) and/or evolution of LTE systems. The evolution of LTE systems includes LTE-advanced (LTE-A), LTE-A Pro, and/or 5G new radio (NR). The communication standard by the IEEE standardization organization includes a wireless local area network (WLAN) system such as IEEE 802.11a/b/g/n/ac/ax. The above system uses various multiple access technologies such as orthogonal frequency division multiple access (OFDMA) and/or single carrier frequency division multiple access (SC-FDMA) for downlink (DL) and/or uplink (UL). For example, only OFDMA may be used for DL and only SC-FDMA may be used for UL. Alternatively, OFDMA and SC-FDMA may be used for DL and/or UL.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDDCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Throughout the disclosure, the terms 'radio access network (RAN) node', 'base station', 'eNB', 'gNB' and 'cell' may be used interchangeably. Further, a UE may be a kind of a wireless device, and throughout the disclosure, the terms 'UE' and 'wireless device' may be used interchangeably.

Throughout the disclosure, the terms 'cell quality', 'signal strength', 'signal quality', 'channel state', 'channel quality', ' channel state/reference signal received power (RSRP)' and ' reference signal received quality (RSRQ)' may be used interchangeably.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

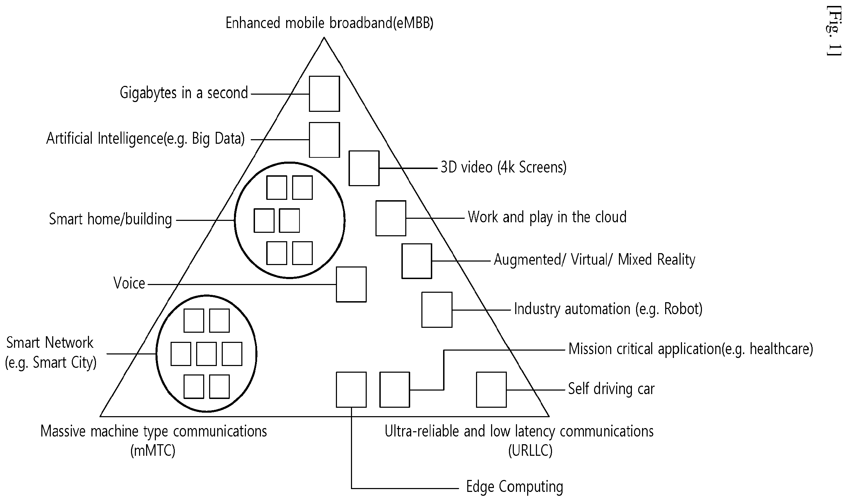

FIG. 1 shows examples of 5G usage scenarios to which the technical features of the present disclosure can be applied.

The 5G usage scenarios shown in FIG. 1 are only exemplary, and the technical features of the present disclosure can be applied to other 5G usage scenarios which are not shown in FIG. 1.

Referring to FIG. 1, the three main requirements areas of 5G include (1) enhanced mobile broadband (eMBB) domain, (2) massive machine type communication (mMTC) area, and (3) ultra-reliable and low latency communications (URLLC) area. Some use cases may require multiple areas for optimization and, other use cases may only focus on only one key performance indicator (KPI). 5G is to support these various use cases in a flexible and reliable way.

eMBB focuses on across-the-board enhancements to the data rate, latency, user density, capacity and coverage of mobile broadband access. The eMBB aims ~10 Gbps of throughput. eMBB far surpasses basic mobile Internet access and covers rich interactive work and media and entertainment applications in cloud and/or augmented reality. Data is one of the key drivers of 5G and may not be able to see dedicated voice services for the first time in the 5G era. In 5G, the voice is expected to be processed as an application simply using the data connection provided by the communication system. The main reason for the increased volume of traffic is an increase in the size of the content and an increase in the number of applications requiring high data rates. Streaming services (audio and video), interactive video and mobile Internet connectivity will become more common as more devices connect to the Internet. Many of these applications require always-on connectivity to push real-time information and notifications to the user. Cloud storage and applications are growing rapidly in mobile communication platforms, which can be applied to both work and entertainment. Cloud storage is a special use case that drives growth of uplink data rate. 5G is also used for remote tasks on the cloud and requires much lower end-to-end delay to maintain a good user experience when the tactile interface is used. In entertainment, for example, cloud games and video streaming are another key factor that increases the demand for mobile broadband capabilities. Entertainment is essential in smartphones and tablets anywhere, including high mobility environments such as trains, cars and airplanes. Another use case is augmented reality and information retrieval for entertainment. Here, augmented reality requires very low latency and instantaneous data amount.

mMTC is designed to enable communication between devices that are low-cost, massive in number and battery-driven, intended to support applications such as smart metering, logistics, and field and body sensors. mMTC aims ~10 years on battery and/or ~1 million devices/km2. mMTC allows seamless integration of embedded sensors in all areas and is one of the most widely used 5G applications. Potentially by 2020, internet-of-things (IoT) devices are expected to reach 20.4 billion. Industrial IoT is one of the areas where 5G plays a key role in enabling smart cities, asset tracking, smart utilities, agriculture and security infrastructures.

URLLC will make it possible for devices and machines to communicate with ultra-reliability, very low latency and high availability, making it ideal for vehicular communication, industrial control, factory automation, remote surgery, smart grids and public safety applications. URLLC aims ~1ms of latency. URLLC includes new services that will change the industry through links with ultra-reliability / low latency, such as remote control of key infrastructure and self-driving vehicles. The level of reliability and latency is essential for smart grid control, industrial automation, robotics, drones control and coordination.

Next, a plurality of use cases included in the triangle of FIG. 1 will be described in more detail.

5G can complement fiber-to-the-home (FTTH) and cable-based broadband (or DOCSIS) as a means of delivering streams rated from hundreds of megabits per second to gigabits per second. This high speed can be required to deliver TVs with resolutions of 4K or more (6K, 8K and above) as well as virtual reality (VR) and augmented reality (AR). VR and AR applications include mostly immersive sporting events. Certain applications may require special network settings. For example, in the case of a VR game, a game company may need to integrate a core server with an edge network server of a network operator to minimize delay.

Automotive is expected to become an important new driver for 5G, with many use cases for mobile communications to vehicles. For example, entertainment for passengers demands high capacity and high mobile broadband at the same time. This is because future users will continue to expect high-quality connections regardless of their location and speed. Another use case in the automotive sector is an augmented reality dashboard. The driver can identify an object in the dark on top of what is being viewed through the front window through the augmented reality dashboard. The augmented reality dashboard displays information that will inform the driver about the object's distance and movement. In the future, the wireless module enables communication between vehicles, information exchange between the vehicle and the supporting infrastructure, and information exchange between the vehicle and other connected devices (e.g. devices accompanied by a pedestrian). The safety system allows the driver to guide the alternative course of action so that he can drive more safely, thereby reducing the risk of accidents. The next step will be a remotely controlled vehicle or self-driving vehicle. This requires a very reliable and very fast communication between different self-driving vehicles and between vehicles and infrastructure. In the future, a self-driving vehicle will perform all driving activities, and the driver will focus only on traffic that the vehicle itself cannot identify. The technical requirements of self-driving vehicles require ultra-low latency and high-speed reliability to increase traffic safety to a level not achievable by humans.

Smart cities and smart homes, which are referred to as smart societies, will be embedded in high density wireless sensor networks. The distributed network of intelligent sensors will identify conditions for cost and energy-efficient maintenance of a city or house. A similar setting can be performed for each home. Temperature sensors, windows and heating controllers, burglar alarms and appliances are all wirelessly connected. Many of these sensors typically require low data rate, low power and low cost. However, for example, real-time high-definition (HD) video may be required for certain types of devices for monitoring.

The consumption and distribution of energy, including heat or gas, is highly dispersed, requiring automated control of distributed sensor networks. The smart grid interconnects these sensors using digital information and communication technologies to collect and act on information. This information can include supplier and consumer behavior, allowing the smart grid to improve the distribution of fuel, such as electricity, in terms of efficiency, reliability, economy, production sustainability, and automated methods. The smart grid can be viewed as another sensor network with low latency.

The health sector has many applications that can benefit from mobile communications. Communication systems can support telemedicine to provide clinical care in remote locations. This can help to reduce barriers to distance and improve access to health services that are not continuously available in distant rural areas. It is also used to save lives in critical care and emergency situations. Mobile communication based wireless sensor networks can provide remote monitoring and sensors for parameters such as heart rate and blood pressure.

Wireless and mobile communications are becoming increasingly important in industrial applications. Wiring costs are high for installation and maintenance. Thus, the possibility of replacing a cable with a wireless link that can be reconfigured is an attractive opportunity in many industries. However, achieving this requires that wireless connections operate with similar delay, reliability, and capacity as cables and that their management is simplified. Low latency and very low error probabilities are new requirements that need to be connected to 5G.

Logistics and freight tracking are important use cases of mobile communications that enable tracking of inventory and packages anywhere using location based information systems. Use cases of logistics and freight tracking typically require low data rates, but require a large range and reliable location information.

NR supports multiple numerology (or, subcarrier spacing (SCS)) to support various 5G services. For example, when the SCS is 15 kHz, wide area in traditional cellular bands may be supported. When the SCS is 30 kHz/60 kHz, dense-urban, lower latency and wider carrier bandwidth may be supported. When the SCS is 60 kHz or higher, a bandwidth greater than 24.25 GHz may be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

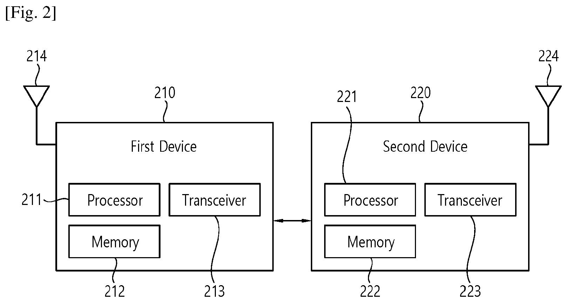

FIG. 2 shows an example of a wireless communication system to which the technical features of the present disclosure can be applied. Referring to FIG. 2, the wireless communication system may include a first device 210 and a second device 220.

The first device 210 includes a base station, a network node, a transmitting UE, a receiving UE, a wireless device, a wireless communication device, a vehicle, a vehicle equipped with an autonomous driving function, a connected car, a drone, an unmanned aerial vehicle (UAV), an artificial intelligence (AI) module, a robot, an AR device, a VR device, a mixed reality (MR) device, a hologram device, a public safety device, an MTC device, an IoT device, a medical device, a fin-tech device (or, a financial device), a security device, a climate/environmental device, a device related to 5G services, or a device related to the fourth industrial revolution.

The second device 220 includes a base station, a network node, a transmitting UE, a receiving UE, a wireless device, a wireless communication device, a vehicle, a vehicle equipped with an autonomous driving function, a connected car, a drone, a UAV, an AI module, a robot, an AR device, a VR device, an MR device, a hologram device, a public safety device, an MTC device, an IoT device, a medical device, a fin-tech device (or, a financial device), a security device, a climate/environmental device, a device related to 5G services, or a device related to the fourth industrial revolution.

For example, the UE may include a mobile phone, a smart phone, a laptop computer, a digital broadcasting terminal, a personal digital assistant (PDA), a portable multimedia player (PMP), a navigation device, a slate personal computer (PC), a tablet PC, an ultrabook, a wearable device (e.g. a smartwatch, a smart glass, a head mounted display (HMD)) . For example, the HMD may be a display device worn on the head. For example, the HMD may be used to implement AR, VR and/or MR.

For example, the drone may be a flying object that is flying by a radio control signal without a person boarding it. For example, the VR device may include a device that implements an object or background in the virtual world. For example, the AR device may include a device that implements connection of an object and/or a background of a virtual world to an object and/or a background of the real world. For example, the MR device may include a device that implements fusion of an object and/or a background of a virtual world to an object and/or a background of the real world. For example, the hologram device may include a device that implements a 360-degree stereoscopic image by recording and playing stereoscopic information by utilizing a phenomenon of interference of light generated by the two laser lights meeting with each other, called holography. For example, the public safety device may include a video relay device or a video device that can be worn by the user's body. For example, the MTC device and the IoT device may be a device that do not require direct human intervention or manipulation. For example, the MTC device and the IoT device may include a smart meter, a vending machine, a thermometer, a smart bulb, a door lock and/or various sensors. For example, the medical device may be a device used for the purpose of diagnosing, treating, alleviating, handling, or preventing a disease. For example, the medical device may be a device used for the purpose of diagnosing, treating, alleviating, or correcting an injury or disorder. For example, the medical device may be a device used for the purpose of inspecting, replacing or modifying a structure or function. For example, the medical device may be a device used for the purpose of controlling pregnancy. For example, the medical device may include a treatment device, a surgical device, an (in vitro) diagnostic device, a hearing aid and/or a procedural device, etc. For example, a security device may be a device installed to prevent the risk that may occur and to maintain safety. For example, the security device may include a camera, a closed-circuit TV (CCTV), a recorder, or a black box. For example, the fin-tech device may be a device capable of providing financial services such as mobile payment. For example, the fin-tech device may include a payment device or a point of sales (POS). For example, the climate/environmental device may include a device for monitoring or predicting the climate/environment.

The first device 210 may include at least one or more processors, such as a processor 211, at least one memory, such as a memory 212, and at least one transceiver, such as a transceiver 213. The processor 211 may perform the functions, procedures, and/or methods of the first device described throughout the disclosure. The processor 211 may perform one or more protocols. For example, the processor 211 may perform one or more layers of the air interface protocol. The memory 212 is connected to the processor 211 and may store various types of information and/or instructions. The transceiver 213 is connected to the processor 211 and may be controlled by the processor 211 to transmit and receive wireless signals.

The second device 220 may include at least one or more processors, such as a processor 221, at least one memory, such as a memory 222, and at least one transceiver, such as a transceiver 223. The processor 221 may perform the functions, procedures, and/or methods of the second device 220 described throughout the disclosure. The processor 221 may perform one or more protocols. For example, the processor 221 may perform one or more layers of the air interface protocol. The memory 222 is connected to the processor 221 and may store various types of information and/or instructions. The transceiver 223 is connected to the processor 221 and may be controlled by the processor 221 to transmit and receive wireless signals.

The memory 212, 222 may be connected internally or externally to the processor 211, 212, or may be connected to other processors via a variety of technologies such as wired or wireless connections.

The first device 210 and/or the second device 220 may have more than one antenna. For example, antenna 214 and/or antenna 224 may be configured to transmit and receive wireless signals.

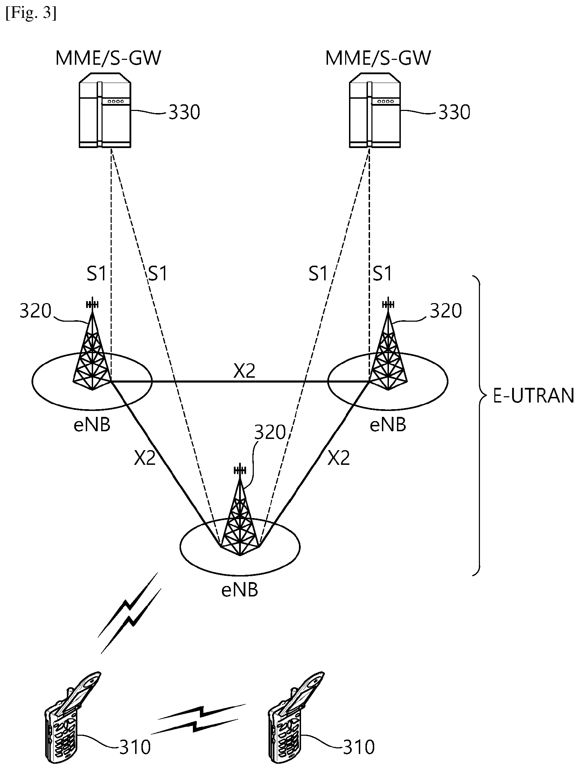

FIG. 3 shows an example of a wireless communication system to which the technical features of the present disclosure can be applied.

Specifically, FIG. 3 shows a system architecture based on an evolved-UMTS terrestrial radio access network (E-UTRAN). The aforementioned LTE is a part of an evolved-UTMS (e-UMTS) using the E-UTRAN.

Referring to FIG. 3, the wireless communication system includes one or more user equipment (UE) 310, an E-UTRAN and an evolved packet core (EPC). The UE 310 refers to a communication equipment carried by a user. The UE 310 may be fixed or mobile. The UE 310 may be referred to as another terminology, such as a mobile station (MS), a user terminal (UT), a subscriber station (SS), a wireless device, etc.

The E-UTRAN consists of one or more evolved NodeB (eNB) 320. The eNB 320 provides the E-UTRA user plane and control plane protocol terminations towards the UE 10. The eNB 320 is generally a fixed station that communicates with the UE 310. The eNB 320 hosts the functions, such as inter-cell radio resource management (RRM), radio bearer (RB) control, connection mobility control, radio admission control, measurement configuration/provision, dynamic resource allocation (scheduler), etc. The eNB 320 may be referred to as another terminology, such as a base station (BS), a base transceiver system (BTS), an access point (AP), etc.

A downlink (DL) denotes communication from the eNB 320 to the UE 310. An uplink (UL) denotes communication from the UE 310 to the eNB 320. A sidelink (SL) denotes communication between the UEs 310. In the DL, a transmitter may be a part of the eNB 320, and a receiver may be a part of the UE 310. In the UL, the transmitter may be a part of the UE 310, and the receiver may be a part of the eNB 320. In the SL, the transmitter and receiver may be a part of the UE 310.

The EPC includes a mobility management entity (MME), a serving gateway (S-GW) and a packet data network (PDN) gateway (P-GW). The MME hosts the functions, such as non-access stratum (NAS) security, idle state mobility handling, evolved packet system (EPS) bearer control, etc. The S-GW hosts the functions, such as mobility anchoring, etc. The S-GW is a gateway having an E-UTRAN as an endpoint. For convenience, MME/S-GW 330 will be referred to herein simply as a "gateway," but it is understood that this entity includes both the MME and S-GW. The P-GW hosts the functions, such as UE Internet protocol (IP) address allocation, packet filtering, etc. The P-GW is a gateway having a PDN as an endpoint. The P-GW is connected to an external network.

The UE 310 is connected to the eNB 320 by means of the Uu interface. The UEs 310 are interconnected with each other by means of the PC5 interface. The eNBs 320 are interconnected with each other by means of the X2 interface. The eNBs 320 are also connected by means of the S1 interface to the EPC, more specifically to the MME by means of the S1-MME interface and to the S-GW by means of the S1-U interface. The S1 interface supports a many-to-many relation between MMEs / S-GWs and eNBs.

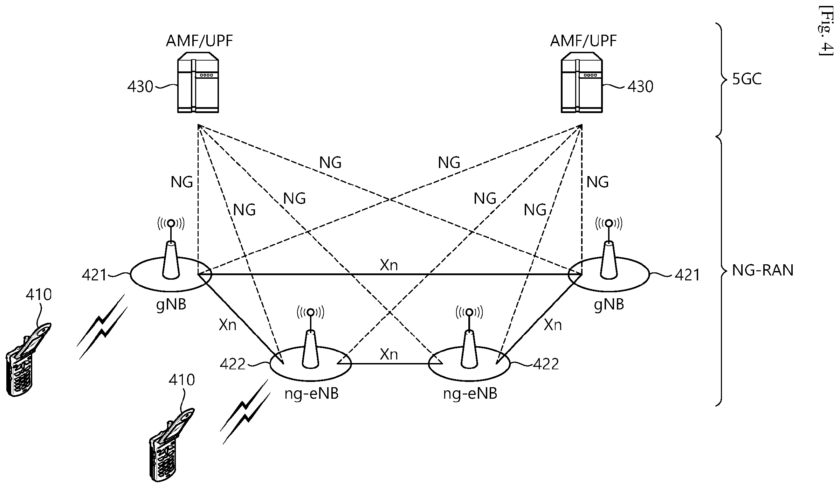

FIG. 4 shows another example of a wireless communication system to which the technical features of the present disclosure can be applied.

Specifically, FIG. 4 shows a system architecture based on a 5G NR. The entity used in the 5G NR (hereinafter, simply referred to as "NR") may absorb some or all of the functions of the entities introduced in FIG. 3 (e.g. eNB, MME, S-GW). The entity used in the NR may be identified by the name "NG" for distinction from the LTE/LTE-A.

Referring to FIG. 4, the wireless communication system includes one or more UE 410, a next-generation RAN (NG-RAN) and a 5th generation core network (5GC). The NG-RAN consists of at least one NG-RAN node. The NG-RAN node is an entity corresponding to the eNB 320 shown in FIG. 3. The NG-RAN node consists of at least one gNB 421 and/or at least one ng-eNB 422. The gNB 421 provides NR user plane and control plane protocol terminations towards the UE 410. The ng-eNB 422 provides E-UTRA user plane and control plane protocol terminations towards the UE 410.

The 5GC includes an access and mobility management function (AMF), a user plane function (UPF) and a session management function (SMF). The AMF hosts the functions, such as NAS security, idle state mobility handling, etc. The AMF is an entity including the functions of the conventional MME. The UPF hosts the functions, such as mobility anchoring, protocol data unit (PDU) handling. The UPF an entity including the functions of the conventional S-GW. The SMF hosts the functions, such as UE IP address allocation, PDU session control.

The gNBs 421 and ng-eNBs 422 are interconnected with each other by means of the Xn interface. The gNBs 421 and ng-eNBs 422 are also connected by means of the NG interfaces to the 5GC, more specifically to the AMF by means of the NG-C interface and to the UPF by means of the NG-U interface.

A protocol structure between network entities described above is described. On the system of FIG. 3 and/or FIG. 4, layers of a radio interface protocol between the UE and the network (e.g. NG-RAN and/or E-UTRAN) may be classified into a first layer (L1), a second layer (L2), and a third layer (L3) based on the lower three layers of the open system interconnection (OSI) model that is well-known in the communication system.

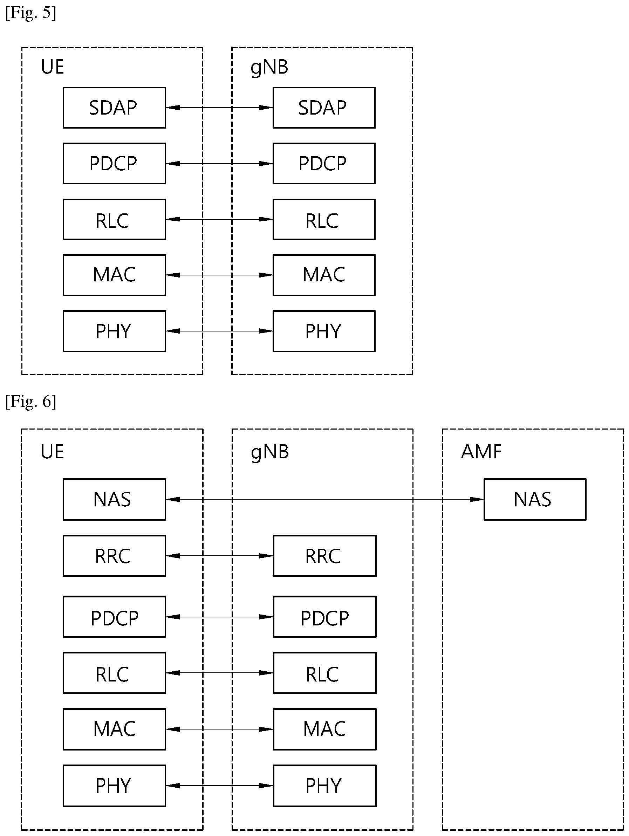

FIG. 5 shows a block diagram of a user plane protocol stack to which the technical features of the present disclosure can be applied. FIG. 6 shows a block diagram of a control plane protocol stack to which the technical features of the present disclosure can be applied.

The user/control plane protocol stacks shown in FIG. 5 and FIG. 6 are used in NR. However, user/control plane protocol stacks shown in FIG. 5 and FIG. 6 may be used in LTE/LTE-A without loss of generality, by replacing gNB/AMF with eNB/MME.

Referring to FIG. 5 and FIG. 6, a physical (PHY) layer belonging to L1. The PHY layer offers information transfer services to media access control (MAC) sublayer and higher layers. The PHY layer offers to the MAC sublayer transport channels. Data between the MAC sublayer and the PHY layer is transferred via the transport channels. Between different PHY layers, i.e., between a PHY layer of a transmission side and a PHY layer of a reception side, data is transferred via the physical channels.

The MAC sublayer belongs to L2. The main services and functions of the MAC sublayer include mapping between logical channels and transport channels, multiplexing/de-multiplexing of MAC service data units (SDUs) belonging to one or different logical channels into/from transport blocks (TB) delivered to/from the physical layer on transport channels, scheduling information reporting, error correction through hybrid automatic repeat request (HARQ), priority handling between UEs by means of dynamic scheduling, priority handling between logical channels of one UE by means of logical channel prioritization (LCP), etc. The MAC sublayer offers to the radio link control (RLC) sublayer logical channels.

The RLC sublayer belong to L2. The RLC sublayer supports three transmission modes, i.e. transparent mode (TM), unacknowledged mode (UM), and acknowledged mode (AM), in order to guarantee various quality of services (QoS) required by radio bearers. The main services and functions of the RLC sublayer depend on the transmission mode. For example, the RLC sublayer provides transfer of upper layer PDUs for all three modes, but provides error correction through ARQ for AM only. In LTE/LTE-A, the RLC sublayer provides concatenation, segmentation and reassembly of RLC SDUs (only for UM and AM data transfer) and re-segmentation of RLC data PDUs (only for AM data transfer). In NR, the RLC sublayer provides segmentation (only for AM and UM) and re-segmentation (only for AM) of RLC SDUs and reassembly of SDU (only for AM and UM). That is, the NR does not support concatenation of RLC SDUs. The RLC sublayer offers to the packet data convergence protocol (PDCP) sublayer RLC channels.

The PDCP sublayer belong to L2. The main services and functions of the PDCP sublayer for the user plane include header compression and decompression, transfer of user data, duplicate detection, PDCP PDU routing, retransmission of PDCP SDUs, ciphering and deciphering, etc. The main services and functions of the PDCP sublayer for the control plane include ciphering and integrity protection, transfer of control plane data, etc.

The service data adaptation protocol (SDAP) sublayer belong to L2. The SDAP sublayer is only defined in the user plane. The SDAP sublayer is only defined for NR. The main services and functions of SDAP include, mapping between a QoS flow and a data radio bearer (DRB), and marking QoS flow ID (QFI) in both DL and UL packets. The SDAP sublayer offers to 5GC QoS flows.

A radio resource control (RRC) layer belongs to L3. The RRC layer is only defined in the control plane. The RRC layer controls radio resources between the UE and the network. To this end, the RRC layer exchanges RRC messages between the UE and the BS. The main services and functions of the RRC layer include broadcast of system information related to AS and NAS, paging, establishment, maintenance and release of an RRC connection between the UE and the network, security functions including key management, establishment, configuration, maintenance and release of radio bearers, mobility functions, QoS management functions, UE measurement reporting and control of the reporting, NAS message transfer to/from NAS from/to UE.

In other words, the RRC layer controls logical channels, transport channels, and physical channels in relation to the configuration, reconfiguration, and release of radio bearers. A radio bearer refers to a logical path provided by L1 (PHY layer) and L2 (MAC/RLC/PDCP/SDAP sublayer) for data transmission between a UE and a network. Setting the radio bearer means defining the characteristics of the radio protocol layer and the channel for providing a specific service, and setting each specific parameter and operation method. Radio bearer may be divided into signaling RB (SRB) and data RB (DRB). The SRB is used as a path for transmitting RRC messages in the control plane, and the DRB is used as a path for transmitting user data in the user plane.

An RRC state indicates whether an RRC layer of the UE is logically connected to an RRC layer of the E-UTRAN. In LTE/LTE-A, when the RRC connection is established between the RRC layer of the UE and the RRC layer of the E-UTRAN, the UE is in the RRC connected state (RRC_CONNECTED). Otherwise, the UE is in the RRC idle state (RRC_IDLE). In NR, the RRC inactive state (RRC_INACTIVE) is additionally introduced. RRC_INACTIVE may be used for various purposes. For example, the massive machine type communications (MMTC) UEs can be efficiently managed in RRC_INACTIVE. When a specific condition is satisfied, transition is made from one of the above three states to the other.

A predetermined operation may be performed according to the RRC state. In RRC_IDLE, public land mobile network (PLMN) selection, broadcast of system information (SI), cell re-selection mobility, core network (CN) paging and discontinuous reception (DRX) configured by NAS may be performed. The UE shall have been allocated an identifier (ID) which uniquely identifies the UE in a tracking area. No RRC context stored in the BS.

In RRC_CONNECTED, the UE has an RRC connection with the network (i.e. E-UTRAN/NG-RAN). Network-CN connection (both C/U-planes) is also established for UE. The UE AS context is stored in the network and the UE. The RAN knows the cell which the UE belongs to. The network can transmit and/or receive data to/from UE. Network controlled mobility including measurement is also performed.

Most of operations performed in RRC_IDLE may be performed in RRC_INACTIVE. But, instead of CN paging in RRC_IDLE, RAN paging is performed in RRC_INACTIVE. In other words, in RRC_IDLE, paging for mobile terminated (MT) data is initiated by core network and paging area is managed by core network. In RRC_INACTIVE, paging is initiated by NG-RAN, and RAN-based notification area (RNA) is managed by NG-RAN. Further, instead of DRX for CN paging configured by NAS in RRC_IDLE, DRX for RAN paging is configured by NG-RAN in RRC_INACTIVE. Meanwhile, in RRC_INACTIVE, 5GC-NG-RAN connection (both C/U-planes) is established for UE, and the UE AS context is stored in NG-RAN and the UE. NG-RAN knows the RNA which the UE belongs to.

NAS layer is located at the top of the RRC layer. The NAS control protocol performs the functions, such as authentication, mobility management, security control.

The physical channels may be modulated according to OFDM processing and utilizes time and frequency as radio resources. The physical channels consist of a plurality of orthogonal frequency division multiplexing (OFDM) symbols in time domain and a plurality of subcarriers in frequency domain. One subframe consists of a plurality of OFDM symbols in the time domain. A resource block is a resource allocation unit, and consists of a plurality of OFDM symbols and a plurality of subcarriers. In addition, each subframe may use specific subcarriers of specific OFDM symbols (e.g. first OFDM symbol) of the corresponding subframe for a physical downlink control channel (PDCCH), i.e. L1/L2 control channel. A transmission time interval (TTI) is a basic unit of time used by a scheduler for resource allocation. The TTI may be defined in units of one or a plurality of slots, or may be defined in units of mini-slots.

The transport channels are classified according to how and with what characteristics data are transferred over the radio interface. DL transport channels include a broadcast channel (BCH) used for transmitting system information, a downlink shared channel (DL-SCH) used for transmitting user traffic or control signals, and a paging channel (PCH) used for paging a UE. UL transport channels include an uplink shared channel (UL-SCH) for transmitting user traffic or control signals and a random access channel (RACH) normally used for initial access to a cell.

Different kinds of data transfer services are offered by MAC sublayer. Each logical channel type is defined by what type of information is transferred. Logical channels are classified into two groups: control channels and traffic channels.

Control channels are used for the transfer of control plane information only. The control channels include a broadcast control channel (BCCH), a paging control channel (PCCH), a common control channel (CCCH) and a dedicated control channel (DCCH). The BCCH is a DL channel for broadcasting system control information. The PCCH is DL channel that transfers paging information, system information change notifications. The CCCH is a channel for transmitting control information between UEs and network. This channel is used for UEs having no RRC connection with the network. The DCCH is a point-to-point bi-directional channel that transmits dedicated control information between a UE and the network. This channel is used by UEs having an RRC connection.

Traffic channels are used for the transfer of user plane information only. The traffic channels include a dedicated traffic channel (DTCH). The DTCH is a point-to-point channel, dedicated to one UE, for the transfer of user information. The DTCH can exist in both UL and DL.

Regarding mapping between the logical channels and transport channels, in DL, BCCH can be mapped to BCH, BCCH can be mapped to DL-SCH, PCCH can be mapped to PCH, CCCH can be mapped to DL-SCH, DCCH can be mapped to DL-SCH, and DTCH can be mapped to DL-SCH. In UL, CCCH can be mapped to UL-SCH, DCCH can be mapped to UL- SCH, and DTCH can be mapped to UL-SCH.

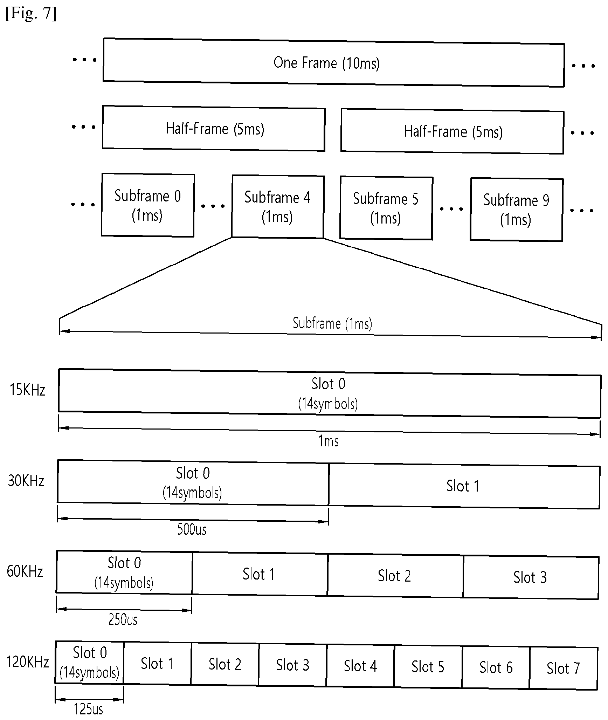

FIG. 7 illustrates a frame structure in a 3GPP based wireless communication system.

The frame structure illustrated in FIG. 7 is purely exemplary and the number of subframes, the number of slots, and/or the number of symbols in a frame may be variously changed. In the 3GPP based wireless communication system, an OFDM numerology (e.g., subcarrier spacing (SCS), transmission time interval (TTI) duration) may be differently configured between a plurality of cells aggregated for one UE. For example, if a UE is configured with different SCSs for cells aggregated for the cell, an (absolute time) duration of a time resource (e.g. a subframe, a slot, or a TTI) including the same number of symbols may be different among the aggregated cells. Herein, symbols may include OFDM symbols (or CP-OFDM symbols), SC-FDMA symbols (or discrete Fourier transform-spread-OFDM (DFT-s-OFDM) symbols).

Referring to FIG. 7, downlink and uplink transmissions are organized into frames. Each frame has Tf = 10 ms duration. Each frame is divided into two half-frames, where each of the half-frames has 5 ms duration. Each half-frame consists of 5 subframes, where the duration Tsf per subframe is 1 ms. Each subframe is divided into slots and the number of slots in a subframe depends on a subcarrier spacing. Each slot includes 14 or 12 OFDM symbols based on a cyclic prefix (CP). In a normal CP, each slot includes 14 OFDM symbols and, in an extended CP, each slot includes 12 OFDM symbols. The numerology is based on exponentially scalable subcarrier spacing βf = 2u*15 kHz. The following table shows the number of OFDM symbols per slot, the number of slots per frame, and the number of slots per for the normal CP, according to the subcarrier spacing βf = 2u*15 kHz.

**[Table 3]**

| u | Nslotsymb | Nframe,usl ot | Nsubframe, uslot |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The following table shows the number of OFDM symbols per slot, the number of slots per frame, and the number of slots per for the extended CP, according to the subcarrier spacing βf = 2u*15 kHz.

**[Table 4]**

| u | Nslotsymb | Nframe,usl ot | Nsubframe, uslot |
|---|---|---|---|
| 2 | 12 | 40 | 4 |

A slot includes plural symbols (e.g., 14 or 12 symbols) in the time domain. For each numerology (e.g. subcarrier spacing) and carrier, a resource grid of Nsize,ugrid,x*NRBsc subcarriers and Nsubframe,usymb OFDM symbols is defined, starting at common resource block (CRB) Nstart,ugrid indicated by higher-layer signaling (e.g. radio resource control (RRC) signaling), where Nsize,ugrid,x is the number of resource blocks (RBs) in the resource grid and the subscript x is DL for downlink and UL for uplink. NRBsc is the number of subcarriers per RB. In the 3GPP based wireless communication system, NRBsc is 12 generally. There is one resource grid for a given antenna port p, subcarrier spacing configuration u, and transmission direction (DL or UL). The carrier bandwidth Nsize,ugrid for subcarrier spacing configuration u is given by the higher-layer parameter (e.g. RRC parameter). Each element in the resource grid for the antenna port p and the subcarrier spacing configuration u is referred to as a resource element (RE) and one complex symbol may be mapped to each RE. Each RE in the resource grid is uniquely identified by an index k in the frequency domain and an index I representing a symbol location relative to a reference point in the time domain. In the 3GPP based wireless communication system, an RB is defined by 12 consecutive subcarriers in the frequency domain. In the 3GPP NR system, RBs are classified into CRBs and physical resource blocks (PRBs). CRBs are numbered from 0 and upwards in the frequency domain for subcarrier spacing configuration u. The center of subcarrier 0 of CRB 0 for subcarrier spacing configuration u coincides with 'point A' which serves as a common reference point for resource block grids. In the 3GPP NR system, PRBs are defined within a bandwidth part (BWP) and numbered from 0 to NsizeBWP,i-1, where i is the number of the bandwidth part. The relation between the physical resource block nPRB in the bandwidth part i and the common resource block nCRB is as follows: nPRB = nCRB + NsizeBWP,i, where NsizeBWP,i is the common resource block where bandwidth part starts relative to CRB 0. The BWP includes a plurality of consecutive RBs. A carrier may include a maximum of N (e.g., 5) BWPs. A UE may be configured with one or more BWPs on a given component carrier. Only one BWP among BWPs configured to the UE can active at a time. The active BWP defines the UE's operating bandwidth within the cell's operating bandwidth.

In the present disclosure, the term "cell" may refer to a geographic area to which one or more nodes provide a communication system, or refer to radio resources. A "cell" of a geographic area may be understood as coverage within which a node can provide service using a carrier and a "cell" as radio resources (e.g. time-frequency resources) is associated with bandwidth (BW) which is a frequency range configured by the carrier. The "cell" associated with the radio resources is defined by a combination of downlink resources and uplink resources, for example, a combination of a downlink (DL) component carrier (CC) and a uplink (UL) CC. The cell may be configured by downlink resources only, or may be configured by downlink resources and uplink resources. Since DL coverage, which is a range within which the node is capable of transmitting a valid signal, and UL coverage, which is a range within which the node is capable of receiving the valid signal from the UE, depends upon a carrier carrying the signal, the coverage of the node may be associated with coverage of the "cell" of radio resources used by the node. Accordingly, the term "cell" may be used to represent service coverage of the node sometimes, radio resources at other times, or a range that signals using the radio resources can reach with valid strength at other times.

In carrier aggregation (CA), two or more CCs are aggregated. A UE may simultaneously receive or transmit on one or multiple CCs depending on its capabilities. CA is supported for both contiguous and non-contiguous CCs. When CA is configured the UE only has one radio resource control (RRC) connection with the network. At RRC connection establishment/re-establishment/handover, one serving cell provides the non-access stratum (NAS) mobility information, and at RRC connection re-establishment/handover, one serving cell provides the security input. This cell is referred to as the Primary Cell (PCell). The PCell is a cell, operating on the primary frequency, in which the UE either performs the initial connection establishment procedure or initiates the connection re-establishment procedure. Depending on UE capabilities, Secondary Cells (SCells) can be configured to form together with the PCell a set of serving cells. An SCell is a cell providing additional radio resources on top of Special Cell. The configured set of serving cells for a UE therefore always consists of one PCell and one or more SCells. For dual connectivity operation, the term Special Cell (SpCell) refers to the PCell of the master cell group (MCG) or the PSCell of the secondary cell group (SCG). An SpCell supports PUCCH transmission and contention-based random access, and is always activated. The MCG is a group of serving cells associated with a master node, comprising of the SpCell (PCell) and optionally one or more SCells. The SCG is the subset of serving cells associated with a secondary node, comprising of the PSCell and zero or more SCells, for a UE configured with dual connectivity (DC). For a UE in RRC_CONNECTED not configured with CA/DC there is only one serving cell comprising of the PCell. For a UE in RRC_CONNECTED configured with CA/DC the term "serving cells" is used to denote the set of cells comprising of the SpCell(s) and all SCells. In DC, two MAC entities are configured in a UE: one for the MCG and one for the SCG.

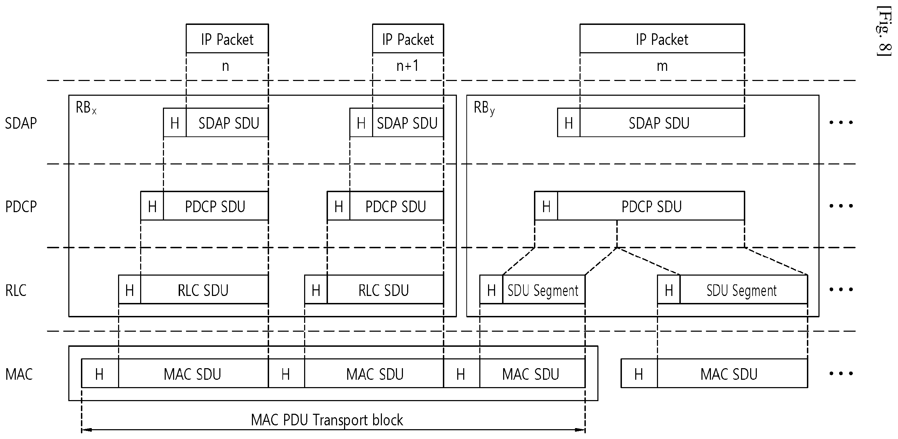

FIG. 8 illustrates a data flow example in the 3GPP NR system.

In FIG. 8, "RB" denotes a radio bearer, and "H" denotes a header. Radio bearers are categorized into two groups: data radio bearers (DRB) for user plane data and signalling radio bearers (SRB) for control plane data. The MAC PDU is transmitted/received using radio resources through the PHY layer to/from an external device. The MAC PDU arrives to the PHY layer in the form of a transport block.

In the PHY layer, the uplink transport channels UL-SCH and RACH are mapped to their physical channels PUSCH and PRACH, respectively, and the downlink transport channels DL-SCH, BCH and PCH are mapped to PDSCH, PBCH and PDSCH, respectively. In the PHY layer, uplink control information (UCI) is mapped to PUCCH, and downlink control information (DCI) is mapped to PDCCH. A MAC PDU related to UL-SCH is transmitted by a UE via a PUSCH based on an UL grant, and a MAC PDU related to DL-SCH is transmitted by a BS via a PDSCH based on a DL assignment.

Data unit(s) (e.g. PDCP SDU, PDCP PDU, RLC SDU, RLC PDU, RLC SDU, MAC SDU, MAC CE, MAC PDU) in the present disclosure is(are) transmitted/received on a physical channel (e.g. PDSCH, PUSCH) based on resource allocation (e.g. UL grant, DL assignment). In the present disclosure, uplink resource allocation is also referred to as uplink grant, and downlink resource allocation is also referred to as downlink assignment. The resource allocation includes time domain resource allocation and frequency domain resource allocation. In the present disclosure, an uplink grant is either received by the UE dynamically on PDCCH, in a Random Access Response, or configured to the UE semi-persistently by RRC. In the present disclosure, downlink assignment is either received by the UE dynamically on the PDCCH, or configured to the UE semi-persistently by RRC signalling from the BS.

Hereinafter, beam failure detection and recovery procedure is described.

The MAC entity may be configured by RRC per Serving Cell with a beam failure recovery (BFR) procedure which is used for indicating to the serving gNB of a new SSB or CSI-RS when beam failure is detected on the serving SSB(s)/CSI-RS(s). Beam failure is detected by counting beam failure instance (BFI) indication from the lower layers to the MAC entity. If *beamFailureRecoveryConfig* is reconfigured by upper layers during an ongoing Random Access procedure for beam failure recovery for SpCell, the MAC entity shall stop the ongoing Random Access procedure and initiate a Random Access procedure using the new configuration.

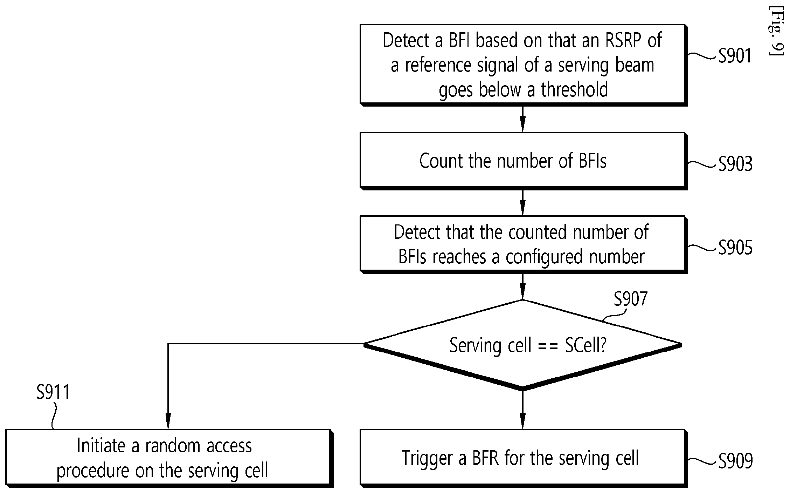

FIG. 9 shows an example of a method for a BFR to which technical features of the present disclosure can be applied. Steps illustrated in FIG> 9 may be performed by a wireless device and/or a UE.

Referring to FIG. 9, in step S901, the UE may detect a BFI based on that a reference signal received power (RSRP) of a serving beam goes below a threshold. The threshold may be preconfigured, or configured from a network via DCI, MAC CE and/or RRC.

In step S903, the UE may count the number of BFIs. For example, a UE variable *BFI_COUNTER* per serving cell may be used. Whenever counting each BFI, the UE may increment *BFI_COUNTER* by 1. The *BFI_COUNTER* may be initially set to 0.

In step S905, the UE may detect that the counted number of BFIs reaches a configured threshold. The configured threshold may be *beamFailurelnstanceMaxcount* may be included in the *beamFailureRecoveryConfig.*

In step S907, the UE may determine whether the serving cell is SCell.

If the serving cell is SCell, in step S909, the UE may trigger a BFR for the serving cell.

If the serving cell is not SCell but SpCell, in step S911, the UE may initiate a random access procedure on the serving cell. For example, the UE may search a candidate beam with good quality, and transmit a random access preamble having an index corresponding to the candidate beam. If the UE receives a random access response for the random access preamble, the UE may consider the random access procedure is successfully completed, and the BFR is completed. The random access procedure may be a contention-free random access procedure.

Detailed procedure of the BFR will be described below.

The MAC entity shall for each Serving Cell configured for beam failure detection:
1> if beam failure instance indication has been received from lower layers:
   2> start or restart the *beamFailureDetectionTimer,*
   2> increment *BFI_COUNTER* by 1;
   2> if *BFI_COUNTER >= beamFailureInstanceMaxCount*:
      3> if the Serving Cell is SCell:
         4> trigger a BFR for this Serving Cell;
      3> else:
         4> initiate a random access procedure on the SpCell.
1> if the *beamFailureDetectionTimer* expires; or
1> if *beamFailureDetectionTimer, beamFailureInstanceMaxCount,* or any of the reference signals used for beam failure detection is reconfigured by upper layers associated with this Serving Cell:
   2> set *BFI_COUNTER* to 0.
1> if the Serving Cell is SpCell and the Random Access procedure initiated for SpCell beam failure recovery is successfully completed:
   2> set *BFI_COUNTER* to 0;
   2> stop the *beamFailureRecoveryTimer,* if configured;
   2> consider the Beam Failure Recovery procedure successfully completed.
1> else if the Serving Cell is SCell, and a PDCCH addressed to C-RNTI indicating uplink grant for a new transmission is received for the HARQ process used for the transmission of the BFR MAC CE or Truncated BFR MAC CE which contains beam failure recovery information of this Serving Cell; or
1> if the SCell is deactivated:
   2> set *BFI_COUNTER* to 0;
   2> consider the Beam Failure Recovery procedure successfully completed and cancel all the triggered BFRs for this Serving Cell.

The MAC entity shall:
1> if the Beam Failure Recovery procedure determines that at least one BFR has been triggered and not cancelled:
   2> if UL-SCH resources are available for a new transmission and if the UL-SCH resources can
      3> instruct the Multiplexing and Assembly procedure to generate the BFR MAC CE.
   2> else if UL-SCH resources are available for a new transmission and if the UL-SCH resources can accommodate the Truncated BFR MAC CE plus its subheader as a result of LCP:
      3> instruct the Multiplexing and Assembly procedure to generate the Truncated BFR MAC CE.
   2> else:
      3> trigger the SR for SCell beam failure recovery for each SCell for which BFR has been triggered and not cancelled.

All BFRs triggered for an SCell shall be cancelled when a MAC PDU is transmitted and this PDU includes a BFR MAC CE or Truncated BFR MAC CE which contains beam failure information of that SCell.

Hereinafter, listen-before-talk (LBT) failure detection and recovery procedure is described.

The lower layer with respect to MAC layer may perform an LBT procedure, according to which a transmission is not performed by lower layers if the channel is identified as being occupied. When lower layer performs an LBT procedure before a transmission and the transmission is not performed, an LBT failure indication is sent to the MAC entity from lower layers. When LBT is not performed by the lower layers, LBT failure indication is not received from lower layers.

The MAC entity may be configured by RRC with a consistent LBT failure recovery procedure. Consistent LBT failure is detected per UL BWP by counting LBT failure indications, for all UL transmissions, from the lower layers to the MAC entity. For the consistent LBT failure recovery procedure, the UE may be configured by RRC with *lbt-FailureRecoveryConfig.*

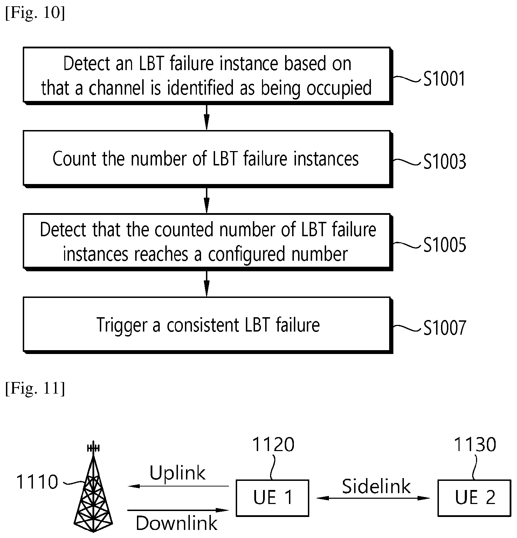

FIG. 10 shows an example of a method for a LBT failure recovery to which technical features of the present disclosure can be applied. Steps illustrated in FIG. 10 may be performed by a wireless device and/or a UE.

Referring to FIG. 10, in step S1001, the wireless device may detect an LBT failure instance based on that a channel is identified as being occupied.

In step S1003, the UE may count the number of LBT failure instances. For example, a UE variable *LBT-_COUNTER--* per serving cell may be used. Whenever counting each LBT failure instance, the UE may increment *LBT_COUNTER* by 1. The *LBT_COUNTER* may be initially set to 0.

In step S1005, the UE may detect that the counted number of LBT failure instances reaches a configured threshold. The configured threshold may be *lbt-FailureInstanceMaxCount* in the *lbt-FailureRecoveryConfig.*

In step S1007, the UE may trigger a consistent LBT failure.

Detailed LBT failure detection and recovery procedure will be described below.

For each activated Serving Cell configured with *lbt-FailureRecoveryConfig,* the MAC entity shall:
1> if LBT failure indication has been received from lower layers:
   2> start or restart the *lbt-FailureDetectionTimer*;
   2> increment *LBT_COUNTER* by 1;
   2> if *LBT_COUNTER >= lbt-FailureInstanceMaxCount*:
      3> trigger consistent LBT failure for the active UL BWP in this Serving Cell;
      3> if this Serving Cell is the SpCell:
         4> if consistent LBT failure has been triggered in all UL BWPs configured with PRACH occasions on same carrier in this Serving Cell:
            5> indicate consistent LBT failure to upper layers.
         4> else:
            5> stop any ongoing Random Access procedure in this Serving Cell;
            5> switch the active UL BWP to an UL BWP, on same carrier in this Serving Cell, configured with PRACH occasion and for which consistent LBT failure has not been triggered;
            5> initiate a Random Access Procedure.
1> if all triggered consistent LBT failures are cancelled in this Serving Cell; or
1> if the *lbt-FailureDetectionTimer* expires; or
1> if *lbt-FailureDetectionTimer* or *lbt-FailureInstanceMaxCount* is reconfigured by upper layers:
   2> set *LBT_COUNTER* to 0.

The MAC entity shall:
1> if consistent LBT failure has been triggered, and not cancelled, in the SpCell; and
1> if UL-SCH resources are available for a new transmission in the SpCell and these UL-SCH resources can accommodate the LBT failure MAC CE plus its subheader as a result of logical channel prioritization:
   2> instruct the Multiplexing and Assembly procedure to generate the LBT failure MAC CE.
1> else if consistent LBT failure has been triggered, and not cancelled, in at least one SCell:
   2> if UL-SCH resources are available for a new transmission in a Serving Cell for which consistent LBT failure has not been triggered and these UL-SCH resources can accommodate the LBT failure MAC CE plus its subheader as a result of logical channel prioritization:
      3> instruct the Multiplexing and Assembly procedure to generate the LBT failure MAC CE.
   2> else:
      3> trigger a Scheduling Request for LBT failure MAC CE.
1> if a MAC PDU is transmitted and LBT failure indication is not received from lower layers and this PDU includes the LBT failure MAC CE:
   2> cancel all the triggered consistent LBT failure(s) in SCell(s) for which consistent LBT failure was indicated in the transmitted LBT failure MAC CE.
1> if consistent LBT failure is triggered and not cancelled in the SpCell; and
1> if the Random Access procedure is considered successfully completed in the SpCell:
   2> cancel all the triggered consistent LBT failure(s) in the SpCell.
1> if *lbt-FailureRecoveryConfig* is reconfigured by upper layers for a Serving Cell:
   2> cancel all the triggered consistent LBT failure(s) in this Serving Cell.

FIG. 11 shows an example of communication links to which technical features of the present disclosure can be applied.

Referring to FIG. 11, the communication links comprise uplink, downlink, and sidelink. The uplink is a communication interface from a UE (e.g., UE 1120) to a base station (e.g., base station 1110, such as eNB and/or gNB). The downlink is a communication interface from a base station (e.g., base station 1110) to a UE (e.g., UE 1120).

The sidelink is UE to UE interface for sidelink communication, sidelink discovery and/or V2X (vehicle to everything) communication. For example, the sidelink may correspond to a PC5 interface for sidelink communication, sidelink discovery and/or V2X sidelink communication.

A UE may perform a communication via network infrastructure. For example, as shown in FIG. 11, the UE1 1120 may perform an uplink transmission and/or receive a downlink transmission, via the base station 1110.

Also, a UE may perform a communication directly with a peer UE without using the network infrastructure. For example, as shown in FIG. 11, the UE1 1120 may perform a direct communication with the UE2 1130 via sidelink, without a support of the network infrastructure such as base station 1110.

According to various embodiments, upper layers configure the UE to receive or transmit sidelink communication on a specific frequency, to monitor or transmit non-public safety (PS) related sidelink discovery announcements on one or more frequencies or to monitor or transmit PS related sidelink discovery announcements on a specific frequency, but only if the UE is authorized to perform these particular proximity service (ProSe) related sidelink activities.

Sidelink communication comprises one-to-many and one-to-one sidelink communication. One-to-many sidelink communication comprises relay related and non-relay related one-to-many sidelink communication. One-to-one sidelink communication comprises relay related and non-relay related one-to-one sidelink communication. In relay related one-to-one sidelink communication the communicating parties comprise one sidelink relay UE and one sidelink remote UE.

Sidelink discovery comprises public safety related (PS related) and non-PS related sidelink discovery. PS related sidelink discovery comprises relay related and non-relay related PS related sidelink discovery. Upper layers indicate to RRC whether a particular sidelink announcement is PS related or non-PS related.

According to various embodiments, upper layers indicate to radio resource control (RRC) whether a particular sidelink procedure is V2X related or not.

According to various embodiments, the UE shall perform V2X sidelink communication operation if at least one of the following conditions 1)~3) is met:
Condition 1)if the UE's serving cell is suitable (RRC_IDLE or RRC_CONNECTED); and if either the selected cell on the frequency used for V2X sidelink communication operation belongs to the registered or equivalent public land mobile network (PLMN) as specified in 3GPP TS 24.334 or the UE is out of coverage on the frequency used for V2X sidelink communication operation as defined in 3GPP TS36.304;
Condition 2) if the UE's serving cell (for RRC_IDLE or RRC_CONNECTED) fulfils the conditions to support V2X sidelink communication in limited service state as specified in 3GPP TS 23.285; and if either the serving cell is on the frequency used for V2X sidelink communication operation or the UE is out of coverage on the frequency used for V2X sidelink communication operation as defined in 3GPP TS 36.304; or
Condition 3) if the UE has no serving cell (RRC_IDLE).

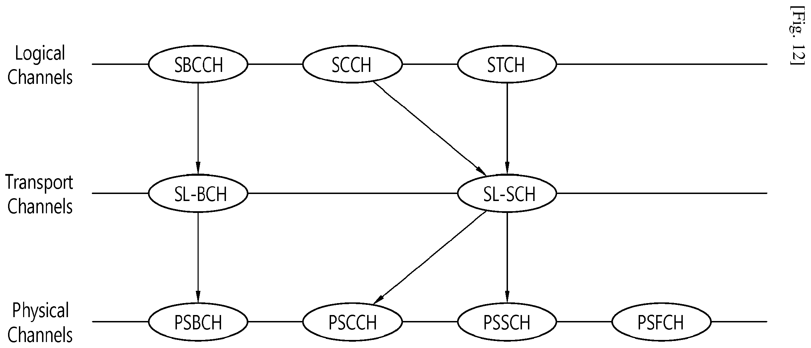

FIG. 12 shows an example of sidelink channel mapping to which technical features of the present disclosure can be applied.

Referring to FIG. 12, sidelink logical channels may comprise sidelink traffic channel (STCH), sidelink control channel (SCCH) and sidelink broadcast control channel (SBCCH). Sidelink transport channels may comprise sidelink shared channel (SL-SCH) and sidelink broadcast channel (SL-BCH). Sidelink physical channels may comprise a physical sidelink shared channel (PSSCH), a physical sidelink control channel (PSCCH), a physical sidelink feedback channel (PSFCH) and physical sidelink broadcast channel (PSBCH).

The SCCH is a sidelink channel for transmitting control information (i.e., PC5-RRC and PC5-S messages) from one UE to one or more other UEs. The SCCH can be mapped to SL-SCH which, in turn, mapped to the PSCCH.

The STCH is a sidelink channel for transmitting user information from one UE to one or more other UEs. The STCH can be mapped to SL-SCH which, in turn, is mapped to the PSSCH.

The SBCCH is a sidelink channel for broadcasting sidelink system information from one UE to other UE(s). The SBCCH can be mapped to SL-BCH which, in turn, mapped to the PSBCH. These channels are also used for sidelink synchronization, and comprise sidelink related system information. For example, the sidelink related system information may be referred to as sidelink master information block (SL-MIB).

The PSCCH carries sidelink control information (SCI). The SCI contains sidelink scheduling information such as resource block assignment, modulation and coding scheme, and/or group destination ID.

The PSSCH carries transport blocks (TBs) of data, and control information for HARQ procedures and CSI/or CSI feedback triggers.

The PSFCH carries HARQ feedback over the sidelink from a UE which is an intended recipient of a PSSCH transmission to the UE which performed the transmission.

As described above, SR can be triggered by BFR procedure. If BFR is triggered for SCell, UE may trigger SR. If SR is triggered, UE may transmit PUCCH resource which may be overlapped with sidelink transmission. Thus, it is not clear how UE should transmit SR triggered by BFR and sidelink transmission in collision.

Further, SR can also be triggered by LBT failure. If consistent LBT failure has been triggered in a SCell, UE may trigger SR. If SR is triggered, UE may transmit PUCCH resource which may be overlapped with sidelink transmission. Thus, it is not clear how UE should transmit SR triggered by LBT failures and sidelink transmission in collision.

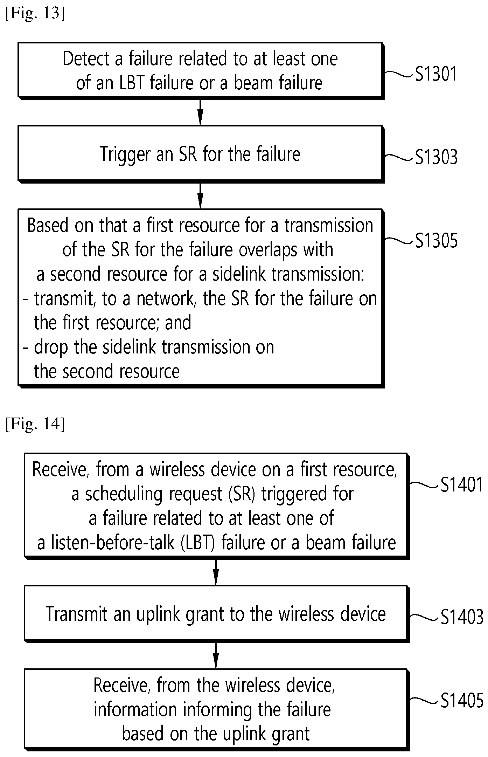

FIG. 13 shows an example of a method performed by a wireless device according to an embodiment of the present disclosure. Steps illustrated in FIG. 13 may also be performed by a UE.

Referring to FIG. 13, in step S1301, the wireless device may detect a failure related to at least one of a listen-before-talk (LBT) failure or a beam failure.

In step S1303, the wireless device may trigger a scheduling request (SR) for the failure.

In step S1305, based on that a first resource for a transmission of the SR for the failure overlaps with a second resource for a sidelink transmission, the wireless device may: transmit, to a network, the SR for the failure on the first resource; and drop the sidelink transmission on the second resource

According to various embodiments, the first resource may comprise a physical uplink control channel (PUCCH), and the second resource may comprise a sidelink shared channel (SL-SCH).

According to various embodiments, the wireless device may count a number of beam failure instances (BFIs). Each BFI may be detected based on that a reference signal received power (RSRP) of a serving beam goes below a threshold level. The wireless device may detect the beam failure based on that the counted number of BFIs reaches a threshold number configured by the network.

According to various embodiments, the wireless device may trigger a beam failure recovery (BFR) based on that the beam failure is detected and a serving cell of the wireless device on which the beam failure is detected is a secondary cell (SCell). The wireless device may trigger the SR for the beam failure while the triggered BFR is pending.

According to various embodiments, the wireless device may count a number of LBT failure instances. Each LBT failure instance may be detected based on that a channel is identified as being occupied. The wireless device may detect the LBT failure based on that the counted number of LBT failure instances reaches a threshold number configured by the network.

According to various embodiments, the wireless device may trigger a consistent LBT failure based on that the LBT failure is detected. The wireless device may trigger the SR for the LBT failure while the triggered consistent LBT failure is pending.

According to various embodiments, after transmitting the SR for the failure to the network, the wireless device may receive an uplink grant from the network. The wireless device may transmit, to the network, information informing the failure based on the uplink grant.

According to various embodiments, the information informing the failure may be transmitted over a media access control (MAC) control element (CE).

According to various embodiments, the transmission of the SR for the failure may be prioritized over the sidelink transmission.

According to various embodiments, the transmission of the SR for the failure may be prioritized over the sidelink transmission based on that the first resource does not overlap with an uplink resource for a physical uplink shared channel (PUSCH) transmission in a random access procedure.

According to various embodiments, the transmission of the SR for the failure on a specific cell may be prioritized over the sidelink transmission on a specific carrier.

According to various embodiments, the wireless device may receive, from the network, information informing at least one of the specific cell or the specific carrier.

For example, UE may measure reference signals and declare beam failure based on the measured reference signal for a serving cell. The UE may trigger beam failure recovery which triggers scheduling request (SR) for the serving cell. If PUCCH resource of the SR is overlapped with a sidelink transmission, the UE may prioritize the PUCCH resource over the sidelink transmission, and drop the sidelink transmission.

For another example, UE may detect consistent LBT failures for a serving cell. The UE may trigger consistent LBT failure which triggers scheduling request (SR) for the serving cell. If PUCCH resource of the SR is overlapped with a sidelink transmission, the UE may prioritize the PUCCH resource over the sidelink transmission, and drop the sidelink transmission.

FIG. 14 shows an example of a method performed by a BS according to an embodiment of the present disclosure.

Referring to FIG. 14, in step S1401, the BS may receive, from a wireless device on a first resource, a scheduling request (SR) triggered for a failure related to at least one of a listen-before-talk (LBT) failure or a beam failure.

In step S1403, the BS may transmit an uplink grant to the wireless device. Based on that the first resource for a reception of the SR for the failure overlaps with a second resource for a sidelink transmission: the SR for the failure may be received from the wireless device on the first resource; and the sidelink transmission on the second resource may be dropped.

In step S1405, the BS may receive, from the wireless device, information informing the failure based on the uplink grant.

The BS in FIG. 14 may be an example of a second device 220 in FIG. 2, and therefore, steps of the BS as illustrated in FIG. 14 may be implemented by the second device 220. For example, the processor 221 may be configured to control the transceiver 223 to receive, from a wireless device on a first resource, a scheduling request (SR) triggered for a failure related to at least one of a listen-before-talk (LBT) failure or a beam failure. The processor 221 may be configured to control the transceiver 223 to transmit an uplink grant to the wireless device. Based on that the first resource for a reception of the SR for the failure overlaps with a second resource for a sidelink transmission: the SR for the failure may be received from the wireless device on the first resource; and the sidelink transmission on the second resource may be dropped. The processor 221 may be configured to control the transceiver 223 to receive, from the wireless device, information informing the failure based on the uplink grant.

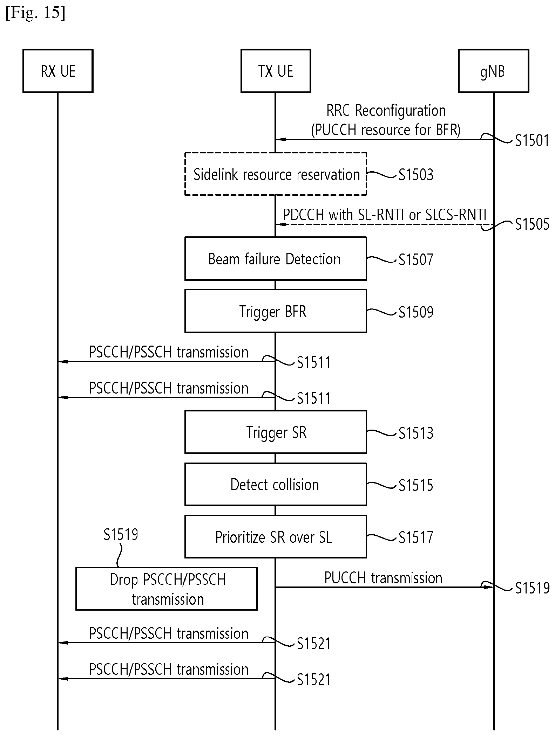

FIG. 15 shows an example of a procedure for prioritizing a transmission of SR triggered for BFR over SL transmission according to an embodiment of the present disclosure.

Referring to FIG. 15, in step S1501, transmission (TX) UE may receive RRC reconfiguration from gNB. The RRC reconfiguration may comprise PUCCH resources for BFR.

In step S1503, for sidelink resource allocation mode 2, the TX UE may reserve sidelink resources and perform sidelink transmissions by using the reserved resources.

In step S1505, for sidelink resource allocation mode 1, the TX UE may monitor PDCCH. If downlink control information (DCI) of which CRC is scrambled by SL-RNTI or SLCS-RNTI is received on PDCCH, the TX UE may be allocated with sidelink resources according to the DCI. Then, the TX UE may perform sidelink transmissions by using the allocated sidelink resources.

In step S1507, the TX UE may detect a beam failure. The MAC entity may be configured by RRC per Serving Cell with a beam failure recovery procedure which is used for indicating to the serving gNB of a new SSB or CSI-RS when beam failure is detected on the serving SSB(s)/CSI-RS(s). Beam failure may be detected by counting beam failure instance indications from the lower layers by the MAC entity. If *beamFailureRecoveryConfig* is reconfigured by upper layers during an ongoing Random Access procedure for beam failure recovery for SpCell, the MAC entity shall stop the ongoing Random Access procedure and initiate a Random Access procedure using the new configuration.

The TX UE may measure reference signals configured for beam failure detection upon receiving RRC reconfiguration. The RRC reconfiguration may also include PUCCH resources for BFR (Beam Failure Recovery) procedure.

If beam failure instance indications have been received from Physical layer, the TX UE start or restart the *beamFailureDetectionTimer and* increment BFI_COUNTER by 1. if BFI_COUNTER >= *beamFailureInstanceMaxCount,* the TX UE may detect the beam failure.

In step S1509, if BFI_COUNTER >= *beamFailureInstanceMaxCount* (i.e., the TX UE detects beam failure) and if the Serving Cell is SCell, the TX UE may trigger a BFR for this Serving Cell.

In step S1511, the TX UE may perform sidelink transmission by using the reserved resources and/or the allocated resources.

If the Beam Failure Recovery procedure determines that at least one BFR has been triggered and not cancelled, if UL-SCH resources are available for a new transmission and if the UL-SCH resources can accommodate the BFR MAC CE plus its subheader as a result of LCP, the TX UE may instruct the Multiplexing and Assembly procedure to generate the BFR MAC CE.

If the Beam Failure Recovery procedure determines that at least one BFR has been triggered and not cancelled, if UL-SCH resources are available for a new transmission and if the UL-SCH resources can accommodate the Truncated BFR MAC CE plus its subheader as a result of LCP, the TX UE may instruct the Multiplexing and Assembly procedure to generate the Truncated BFR MAC CE.

If the Beam Failure Recovery procedure determines that at least one BFR has been triggered and not cancelled and if UL-SCH resources are not available for a new transmission or if the UL-SCH resources cannot accommodate the BFR MAC CE/the truncated BFR MAC CE plus its subheader as a result of LCP, in step S1513, the TX UE may trigger the SR for SCell beam failure recovery for each SCell for which BFR has been triggered and not cancelled.

In step S1515, the TX UE may detect collision between PUCCH transmission for the triggered SR and a sidelink transmission. PUCCH transmission may occur on a different serving cell than the serving cell where Beam failure was detected.

In step S1517, the TX UE may prioritize PUCCH transmission for SR over sidelink transmission if the following conditions are met:

- If the PUCCH resource for the SR transmission occasion does not overlap with an uplink grant received in a Random Access Response nor with the PUSCH duration of a message A payload;

- If the physical layer can signal the SR on one valid PUCCH resource for SR; and

- If a SL-SCH resource overlaps with the PUCCH resource for the SR transmission occasion for the pending SR triggered for beam failure recovery of an SCell, and the MAC entity is not able to perform this SR transmission simultaneously with the transmission of the SL-SCH resource.

gNB can indicate to the TX UE whether a SR triggered for BFR on a particular cell can be prioritized over sidelink transmission on a particular carrier. In this case, in case that BFR has been triggered for beam failure on the cell and sidelink transmission occurs on the carrier, the TX UE may prioritize PUCCH transmission for SR over the sidelink transmission. Otherwise, the TX UE may not prioritize PUCCH transmission for SR over the sidelink transmission.

The TX UE may deprioritize PUCCH transmission for other SR over sidelink transmission if the SR is not triggered for BFR.

In step S1519, if the TX UE prioritizes PUCCH transmission for SR over sidelink transmission, the TX UE may transmit the SR triggered for BFR through PUCCH to the gNB and drop the sidelink transmission.

In step S1521, if sidelink transmission does not collide with any SR, the TX UE may perform sidelink transmission by using the reserved resources and/or the allocated resources.

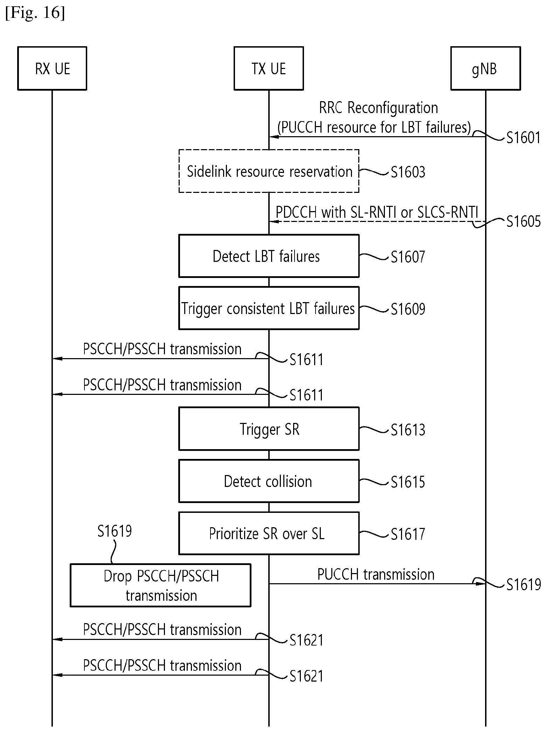

FIG. 16 shows an example of a procedure for prioritizing a transmission of SR triggered for LBT failures over SL transmission according to an embodiment of the present disclosure.

Referring to FIG. 16, in step S1601, a TX UE may receive a RRC reconfiguration from gNB. The RRC reconfiguration may comprise PUCCH resources for LBT failures.

In step S1603, for sidelink resource allocation mode 2, UE may reserve sidelink resources and perform sidelink transmissions by using the reserved resources.

In step S1605, for sidelink resource allocation mode 1, UE may monitor PDCCH. If DCI of which CRC is scrambled by SL-RNTI or SLCS-RNTI is received on PDCCH, UE may be allocated with sidelink resources according to the DCI. Then, the TX UE may perform sidelink transmissions by using the allocated resources.

The MAC entity may be configured by RRC with a consistent LBT failure recovery procedure. Consistent LBT failure may be detected per UL BWP by counting LBT failure indications, for all UL transmissions, from the lower layers to the MAC entity.

If LBT failure indication has been received from lower layers, the TX UE may start or restart the *lbt-FailureDetectionTimer* and increment LBT_COUNTER by 1.

If LBT_COUNTER *>= lbt-FailureInstanceMaxCount,* in step S1607, the TX UE may detect the LBT failures.

In step S1609, if LBT_COUNTER >= *lbt-FailureInstanceMaxCount* (the TX UE detects the LBT failures), the TX UE may trigger consistent LBT failure for the active UL BWP in this Serving Cell.

In step S1611, the TX UE may perform a sidelink transmission using the reserved resources and/or allocated resources.

If consistent LBT failure has been triggered, and not cancelled, in at least one SCell, if UL-SCH resources are available for a new transmission in a Serving Cell for which consistent LBT failure has not been triggered and these UL-SCH resources can accommodate the LBT failure MAC CE plus its subheader as a result of logical channel prioritization, the TX UE may instruct the Multiplexing and Assembly procedure to generate the LBT failure MAC CE.

If consistent LBT failure has been triggered, and not cancelled, in at least one SCell and if UL-SCH resources are not available for a new transmission in a Serving Cell for which consistent LBT failure has not been triggered or these UL-SCH resources cannot accommodate the LBT failure MAC CE plus its subheader as a result of logical channel prioritization, in step S1613, the TX UE may trigger a Scheduling Request for LBT failure MAC CE.

In step S1615, the TX UE may detect collision between PUCCH transmission for the triggered SR and a sidelink transmission. PUCCH transmission may occur on a different serving cell than the serving cell where LBT failures occurred.

In step S1617, the TX UE may prioritize PUCCH transmission for SR over the sidelink transmission if the following conditions are met:
- If the PUCCH resource for the SR transmission occasion does not overlap with an uplink grant received in a Random Access Response nor with the PUSCH duration of a message A payload;
- If the physical layer can signal the SR on one valid PUCCH resource for SR; and
- if a SL-SCH resource overlaps with the PUCCH resource for the SR transmission occasion for the pending SR triggered for LBT failure MAC CE, and the MAC entity is not able to perform this SR transmission simultaneously with the transmission of the SL-SCH resource.

gNB can indicate to UE whether a SR triggered for LBT failure on a first cell/carrier can be prioritized over sidelink transmission on a second carrier. In this case, in case that consistent LBT failures have been triggered for LBT failure on the first cell/carrier and sidelink transmission occurs on the second carrier, the TX UE may prioritize PUCCH transmission for the SR over the sidelink transmission. Otherwise, the TX UE may not prioritize PUCCH transmission for the SR over the sidelink transmission.

The TX UE may deprioritize PUCCH transmission for other SR over sidelink transmission if the SR is not triggered for LBT failure MAC CE.

In step S1619, if the TX UE prioritizes PUCCH transmission for SR over sidelink transmission, the TX UE may transmit the SR triggered for LBT failure through PUCCH to the gNB, and drop the sidelink transmission.

In step S1621, if sidelink transmission does not collide with any SR, the TX UE may perform sidelink transmission by using the reserved resources and/or the allocated resources.

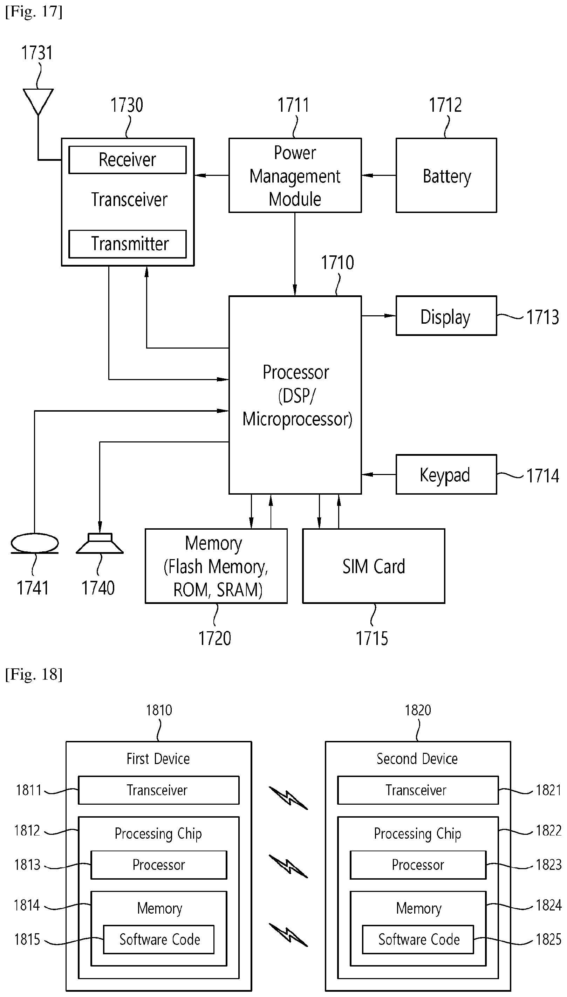

FIG. 17 shows a UE to implement an embodiment of the present disclosure. The present disclosure described above for UE side may be applied to this embodiment. The UE in FIG. 17 may be an example of first device 210 as illustrated in FIG. 2.

A UE includes a processor 1710 (i.e., processor 211), a power management module 1711, a battery 1712, a display 1713, a keypad 1714, a subscriber identification module (SIM) card 1715, a memory 1720 (i.e., memory 212), a transceiver 1730 (i.e., transceiver 213), one or more antennas 1731, a speaker 1740, and a microphone 1741.

The processor 1710 may be configured to implement proposed functions, procedures and/or methods described in this description. Layers of the radio interface protocol may be implemented in the processor 1710. The processor 1710 may include application-specific integrated circuit (ASIC), other chipset, logic circuit and/or data processing device. The processor 1710 may be an application processor (AP). The processor 1710 may include at least one of a digital signal processor (DSP), a central processing unit (CPU), a graphics processing unit (GPU), a modem (modulator and demodulator). An example of the processor 1710 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The processor 1710 may be configured to, or configured to control the transceiver 1730 to implement steps performed by the UE and/or the wireless device throughout the disclosure.

The power management module 1711 manages power for the processor 1710 and/or the transceiver 1730. The battery 1712 supplies power to the power management module 1711. The display 1713 outputs results processed by the processor 1710. The keypad 1714 receives inputs to be used by the processor 1710. The keypad 1714 may be shown on the display 1713. The SIM card 1715 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The memory 1720 is operatively coupled with the processor 1710 and stores a variety of information to operate the processor 1710. The memory 1720 may include read-only memory (ROM), random access memory (RAM), flash memory, memory card, storage medium and/or other storage device. When the embodiments are implemented in software, the techniques described herein can be implemented with modules (e.g., procedures, functions, and so on) that perform the functions described herein. The modules can be stored in the memory 1720 and executed by the processor 1710. The memory 1720 can be implemented within the processor 1710 or external to the processor 1710 in which case those can be communicatively coupled to the processor 1710 via various means as is known in the art.

The transceiver 1730 is operatively coupled with the processor 1710, and transmits and/or receives a radio signal. The transceiver 1730 includes a transmitter and a receiver. The transceiver 1730 may include baseband circuitry to process radio frequency signals. The transceiver 1730 controls the one or more antennas 1731 to transmit and/or receive a radio signal.

The speaker 1740 outputs sound-related results processed by the processor 1710. The microphone 1741 receives sound-related inputs to be used by the processor 1710.

According to various embodiments, the processor 1710 may be configured to, or configured to control the transceiver 1730 to implement steps performed by the UE and/or the wireless device throughout the disclosure. For example, the processor 1710 may be configured to detect a failure related to at least one of a listen-before-talk (LBT) failure or a beam failure. The processor 1710 may be configured to trigger a scheduling request (SR) for the failure. Based on that a first resource for a transmission of the SR for the failure overlaps with a second resource for a sidelink transmission, the processor 1710 may be configured to: control the transceiver 1730 to transmit, to a network, the SR for the failure on the first resource; and drop the sidelink transmission on the second resource.

FIG. 18 shows another example of a wireless communication system to which the technical features of the present disclosure can be applied.

Referring to FIG. 18, the wireless communication system may include a first device 1810 (i.e., first device 210) and a second device 1820 (i.e., second device 220).

The first device 1810 may include at least one transceiver, such as a transceiver 1811, and at least one processing chip, such as a processing chip 1812. The processing chip 1812 may include at least one processor, such a processor 1813, and at least one memory, such as a memory 1814. The memory may be operably connectable to the processor 1813. The memory 1814 may store various types of information and/or instructions. The memory 1814 may store a software code 1815 which implements instructions that, when executed by the processor 1813, perform operations of the first device 910 described throughout the disclosure. For example, the software code 1815 may implement instructions that, when executed by the processor 1813, perform the functions, procedures, and/or methods of the first device 1810 described throughout the disclosure. For example, the software code 1815 may control the processor 1813 to perform one or more protocols. For example, the software code 1815 may control the processor 1813 to perform one or more layers of the radio interface protocol.

The second device 1820 may include at least one transceiver, such as a transceiver 1821, and at least one processing chip, such as a processing chip 1822. The processing chip 1822 may include at least one processor, such a processor 1823, and at least one memory, such as a memory 1824. The memory may be operably connectable to the processor 1823. The memory 1824 may store various types of information and/or instructions. The memory 1824 may store a software code 1825 which implements instructions that, when executed by the processor 1823, perform operations of the second device 1820 described throughout the disclosure. For example, the software code 1825 may implement instructions that, when executed by the processor 1823, perform the functions, procedures, and/or methods of the second device 1820 described throughout the disclosure. For example, the software code 1825 may control the processor 1823 to perform one or more protocols. For example, the software code 1825 may control the processor 1823 to perform one or more layers of the radio interface protocol.

According to various embodiments, the first device 1810 as illustrated in FIG. 18 may comprise a wireless device. The wireless device may comprise a transceiver 1811, a processing chip 1812. The processing chip 1812 may comprise a processor 1813, and a memory 1814. The memory 1814 may be operably connectable to the processor 1813. The memory 1814 may store various types of information and/or instructions. The memory 1814 may store a software code 1815 which implements instructions that, when executed by the processor 1813, perform operations comprising: detecting a failure related to at least one of a listen-before-talk (LBT) failure or a beam failure; triggering a scheduling request (SR) for the failure; and based on that a first resource for a transmission of the SR for the failure overlaps with a second resource for a sidelink transmission: transmitting, to a network, the SR for the failure on the first resource; and dropping the sidelink transmission on the second resource.

According to various embodiments, a non-transitory computer-readable medium may have stored thereon a plurality of instructions. The plurality of instructions, when executed by a processor of a wireless device, may cause the wireless device to: detect a failure related to at least one of a listen-before-talk (LBT) failure or a beam failure; trigger a scheduling request (SR) for the failure; and based on that a first resource for a transmission of the SR for the failure overlaps with a second resource for a sidelink transmission: transmit, to a network, the SR for the failure on the first resource; and drop the sidelink transmission on the second resource.

The present disclosure may be applied to various future technologies, such as AI, robots, autonomous-driving/self-driving vehicles, and/or extended reality (XR).

### <AI>

AI refers to artificial intelligence and/or the field of studying methodology for making it. Machine learning is a field of studying methodologies that define and solve various problems dealt with in AI. Machine learning may be defined as an algorithm that enhances the performance of a task through a steady experience with any task.

An artificial neural network (ANN) is a model used in machine learning. It can mean a whole model of problem-solving ability, consisting of artificial neurons (nodes) that form a network of synapses. An ANN can be defined by a connection pattern between neurons in different layers, a learning process for updating model parameters, and/or an activation function for generating an output value. An ANN may include an input layer, an output layer, and optionally one or more hidden layers. Each layer may contain one or more neurons, and an ANN may include a synapse that links neurons to neurons. In an ANN, each neuron can output a summation of the activation function for input signals, weights, and deflections input through the synapse. Model parameters are parameters determined through learning, including deflection of neurons and/or weights of synaptic connections. The hyper-parameter means a parameter to be set in the machine learning algorithm before learning, and includes a learning rate, a repetition number, a mini batch size, an initialization function, etc. The objective of the ANN learning can be seen as determining the model parameters that minimize the loss function. The loss function can be used as an index to determine optimal model parameters in learning process of ANN.

Machine learning can be divided into supervised learning, unsupervised learning, and reinforcement learning, depending on the learning method. Supervised learning is a method of learning ANN with labels given to learning data. Labels are the answers (or result values) that ANN must infer when learning data is input to ANN. Unsupervised learning can mean a method of learning ANN without labels given to learning data. Reinforcement learning can mean a learning method in which an agent defined in an environment learns to select a behavior and/or sequence of actions that maximizes cumulative compensation in each state.

Machine learning, which is implemented as a deep neural network (DNN) that includes multiple hidden layers among ANN, is also called deep learning. Deep learning is part of machine learning. In the following, machine learning is used to mean deep learning.

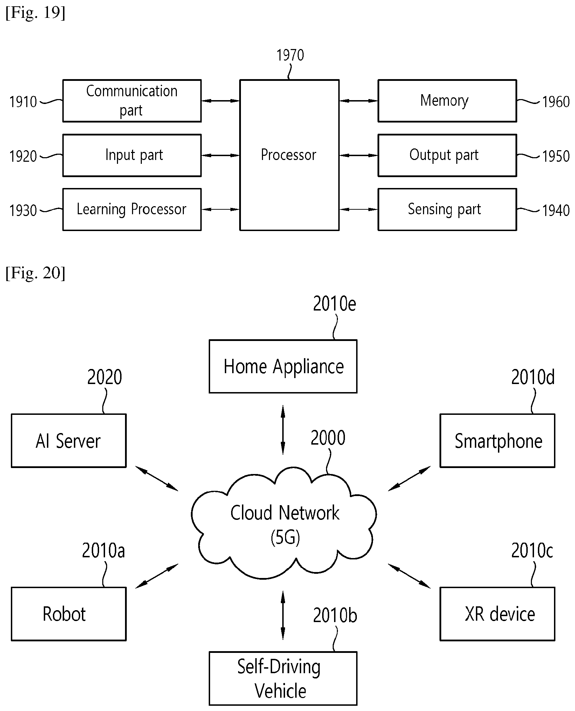

FIG. 19 shows an example of an AI device to which the technical features of the present disclosure can be applied.

The AI device 1900 may be implemented as a stationary device or a mobile device, such as a TV, a projector, a mobile phone, a smartphone, a desktop computer, a notebook, a digital broadcasting terminal, a PDA, a PMP, a navigation device, a tablet PC, a wearable device, a set-top box (STB), a digital multimedia broadcasting (DMB) receiver, a radio, a washing machine, a refrigerator, a digital signage, a robot, a vehicle, etc.

Referring to FIG. 19, the AI device 1900 may include a communication part 1910, an input part 1920, a learning processor 1930, a sensing part 1940, an output part 1950, a memory 1960, and a processor 1970.

The communication part 1910 can transmit and/or receive data to and/or from external devices such as the AI devices and the AI server using wire and/or wireless communication technology. For example, the communication part 1910 can transmit and/or receive sensor information, a user input, a learning model, and a control signal with external devices. The communication technology used by the communication part 1910 may include a global system for mobile communication (GSM), a code division multiple access (CDMA), an LTE/LTE-A, a 5G, a WLAN, a Wi-Fi, Bluetooth^{™}, radio frequency identification (RFID), infrared data association (IrDA), ZigBee, and/or near field communication (NFC).

The input part 1920 can acquire various kinds of data. The input part 1920 may include a camera for inputting a video signal, a microphone for receiving an audio signal, and a user input part for receiving information from a user. A camera and/or a microphone may be treated as a sensor, and a signal obtained from a camera and/or a microphone may be referred to as sensing data and/or sensor information. The input part 1920 can acquire input data to be used when acquiring an output using learning data and a learning model for model learning. The input part 1920 may obtain raw input data, in which case the processor 1970 or the learning processor 1930 may extract input features by preprocessing the input data.

The learning processor 1930 may learn a model composed of an ANN using learning data. The learned ANN can be referred to as a learning model. The learning model can be used to infer result values for new input data rather than learning data, and the inferred values can be used as a basis for determining which actions to perform. The learning processor 1930 may perform AI processing together with the learning processor of the AI server. The learning processor 1930 may include a memory integrated and/or implemented in the AI device 1900. Alternatively, the learning processor 1930 may be implemented using the memory 1960, an external memory directly coupled to the AI device 1900, and/or a memory maintained in an external device.

The sensing part 1940 may acquire at least one of internal information of the AI device 1900, environment information of the AI device 1900, and/or the user information using various sensors. The sensors included in the sensing part 1940 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a light detection and ranging (LIDAR), and/or a radar.

The output part 1950 may generate an output related to visual, auditory, tactile, etc. The output part 1950 may include a display unit for outputting visual information, a speaker for outputting auditory information, and/or a haptic module for outputting tactile information.

The memory 1960 may store data that supports various functions of the AI device 1900. For example, the memory 1960 may store input data acquired by the input part 1920, learning data, a learning model, a learning history, etc.

The processor 1970 may determine at least one executable operation of the AI device 1900 based on information determined and/or generated using a data analysis algorithm and/or a machine learning algorithm. The processor 1970 may then control the components of the AI device 1900 to perform the determined operation. The processor 1970 may request, retrieve, receive, and/or utilize data in the learning processor 1930 and/or the memory 1960, and may control the components of the AI device 1900 to execute the predicted operation and/or the operation determined to be desirable among the at least one executable operation. The processor 1970 may generate a control signal for controlling the external device, and may transmit the generated control signal to the external device, when the external device needs to be linked to perform the determined operation. The processor 1970 may obtain the intention information for the user input and determine the user's requirements based on the obtained intention information. The processor 1970 may use at least one of a speech-to-text (STT) engine for converting speech input into a text string and/or a natural language processing (NLP) engine for acquiring intention information of a natural language, to obtain the intention information corresponding to the user input. At least one of the STT engine and/or the NLP engine may be configured as an ANN, at least a part of which is learned according to a machine learning algorithm. At least one of the STT engine and/or the NLP engine may be learned by the learning processor 1930 and/or learned by the learning processor of the AI server, and/or learned by their distributed processing. The processor 1970 may collect history information including the operation contents of the AI device 1900 and/or the user's feedback on the operation, etc. The processor 1970 may store the collected history information in the memory 1960 and/or the learning processor 1930, and/or transmit to an external device such as the AI server. The collected history information can be used to update the learning model. The processor 1970 may control at least some of the components of AI device 1900 to drive an application program stored in memory 1960. Furthermore, the processor 1970 may operate two or more of the components included in the AI device 1900 in combination with each other for driving the application program.

FIG. 20 shows an example of an AI system to which the technical features of the present disclosure can be applied.

Referring to FIG. 20, in the AI system, at least one of an AI server 2020, a robot 2010a, an autonomous vehicle 2010b, an XR device 2010c, a smartphone 2010d and/or a home appliance 2010e is connected to a cloud network 2000. The robot 2010a, the autonomous vehicle 2010b, the XR device 2010c, the smartphone 2010d, and/or the home appliance 2010e to which the AI technology is applied may be referred to as AI devices 2010a to 2010e.

The cloud network 2000 may refer to a network that forms part of a cloud computing infrastructure and/or resides in a cloud computing infrastructure. The cloud network 2000 may be configured using a 3G network, a 4G or LTE network, and/or a 5G network. That is, each of the devices 2010a to 2010e and 2020 consisting the AI system may be connected to each other through the cloud network 2000. In particular, each of the devices 2010a to 2010e and 2020 may communicate with each other through a base station, but may directly communicate with each other without using a base station.

The AI server 2020 may include a server for performing AI processing and a server for performing operations on big data. The AI server 2020 is connected to at least one or more of AI devices constituting the AI system, i.e. the robot 2010a, the autonomous vehicle 2010b, the XR device 2010c, the smartphone 2010d and/or the home appliance 2010e through the cloud network 2000, and may assist at least some AI processing of the connected AI devices 2010a to 2010e. The AI server 2020 can learn the ANN according to the machine learning algorithm on behalf of the AI devices 2010a to 2010e, and can directly store the learning models and/or transmit them to the AI devices 2010a to 2010e. The AI server 2020 may receive the input data from the AI devices 2010a to 2010e, infer the result value with respect to the received input data using the learning model, generate a response and/or a control command based on the inferred result value, and transmit the generated data to the AI devices 2010a to 2010e. Alternatively, the AI devices 2010a to 2010e may directly infer a result value for the input data using a learning model, and generate a response and/or a control command based on the inferred result value.

Various embodiments of the AI devices 2010a to 2010e to which the technical features of the present disclosure can be applied will be described. The AI devices 2010a to 2010e shown in FIG. 20 can be seen as specific embodiments of the AI device 1900 shown in FIG. 19.

The present disclosure can have various advantageous effects.

For example, priority between SR transmission triggered for beam failure recovery and sidelink transmission can be clearly determined.

For example, priority between SR transmission triggered for LBT failures and sidelink transmission can be clearly determined.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method performed by a wireless device in a wireless communication system, the method comprising:
detecting (S1507, S1607) a failure comprising at least one of a first failure or a second failure, wherein the first failure is detected based on a power of a reference signal received through a serving beam going below a threshold level, and the second failure is detected based on a channel being occupied;
triggering (S1513, S1613) a first scheduling request based on detecting the failure; and
based on i) a resource for a transmission of the first scheduling request overlapping with a resource for a device-to-device transmission, and ii) the wireless device being unable to perform the transmission of the first scheduling request simultaneously with the device-to-device transmission, prioritizing (S1517, S1617) the transmission of the first scheduling request over the device-to-device transmission,
wherein, based on i) a resource for a transmission of a second scheduling request overlapping with the resource for the device-to-device transmission, and ii) the wireless device being unable to perform the transmission of the second scheduling request simultaneously with the device-to-device transmission, the transmission of the second scheduling request is de-prioritized over the device-to-device communication,
wherein the first scheduling request is a scheduling request triggered for the failure, and
wherein the second scheduling request is a scheduling request not triggered for the failure.

2. The method of claim 1, wherein at least one of the resource for the transmission of the first scheduling request or the resource for the transmission of the second scheduling request comprises a physical control channel for uplink, and
wherein the resource for the transmission of the device-to-device transmission comprises a shared channel for the device-to-device transmission.

3. The method of claim 1, wherein the detecting (S1507, S1607) of the failure comprises:
counting a number of beam failure instances, wherein each beam failure instance is detected based on the power of the reference signal received through the serving beam going below the threshold level; and
detecting the first failure based on the counted number of beam failure instances reaching a threshold number configured by the network,
wherein the first failure is a beam failure.

4. The method of claim 3, further comprising:
triggering a beam failure recovery based on the beam failure being detected and a serving cell of the wireless device on which the beam failure is detected being a secondary cell,
wherein the triggering of the first scheduling request comprises:
triggering the first scheduling request for the beam failure while the triggered beam failure recovery is pending.

5. The method of claim 1, wherein the detecting (S1507, S1607) of the failure comprises:
counting a number of listen-before-talk failure instances, wherein each listen-before-talk failure instance is detected based on the channel being occupied; and
detecting the second failure based on the counted number of listen-before-talk failure instances reaching a threshold number configured by the network,
wherein the second failure is a listen-before-talk failure.

6. The method of claim 5, further comprising:
triggering a consistent listen-before-talk failure based on the listen-before-talk failure being detected,
wherein the triggering (S1513, S1613) of the first scheduling request comprises:
triggering (S1513, S1613) the first scheduling request for the listen-before-talk failure while the triggered consistent listen-before-talk failure is pending.

7. The method of claim 1, further comprising:
transmitting the first scheduling request to the network;
receiving an uplink grant from the network; and
transmitting, to the network, information informing the failure based on the uplink grant.

8. The method of claim 7, wherein the information informing the failure is transmitted over a control element of a media access control layer.

9. The method of claim 1, wherein the transmission of the first scheduling request is prioritized (S1517, S1617) over the device-to-device transmission based on the resource for the transmission of the first scheduling request not overlapping with a resource for a physical uplink shared channel transmission in a random access procedure.

10. The method of claim 1, wherein the transmission of the first scheduling request on a specific cell is prioritized (S1517, S1617) over the device-to-device transmission on a specific carrier.

11. The method of claim 10, further comprising:
receiving, from the network, information informing at least one of the specific cell or the specific carrier.

12. The method of claim 1, wherein the wireless device is in communication with at least one of a user equipment, a network, or autonomous vehicles other than the wireless device.

13. An apparatus (210) adapted to implement a method of any one of claims 1 to 12.

## Patentansprüche

1. Verfahren, das von einem drahtlosen Gerät in einem drahtlosen Kommunikationssystem ausgeführt wird, wobei das Verfahren umfasst:
Erkennen (S1507, S1607) eines Fehlers, der einen ersten Fehler und/oder einen zweiten Fehler umfasst, wobei der erste Fehler erfasst wird, wenn eine Leistung eines über einen bedienenden Strahl empfangenen Referenzsignals unter einen Schwellenwert fällt, und der zweite Fehler erfasst wird, wenn ein Kanal belegt ist;
Auslösen (S1513, S1613) einer ersten Planungsanforderung auf der Grundlage der Erkennung des Fehlers; und
basierend i) auf einer Ressource für eine Übertragung der ersten Planungsanforderung, die sich mit einer Ressource für eine Gerät-zu-Gerät-Übertragung überschneidet, und ii) darauf, dass das drahtlose Gerät nicht in der Lage ist, die Übertragung der ersten Planungsanforderung simultan mit der Gerät-zu-Gerät-Übertragung durchzuführen, Priorisieren (S1517, S1617) der Übertragung der ersten Planungsanforderung gegenüber der Gerät-zu-Gerät-Übertragung,
wobei, basierend i) auf einer Ressource für eine Übertragung einer zweiten Planungsanforderung, die sich mit der Ressource für die Gerät-zu-Gerät-Übertragung überschneidet, und ii) darauf, dass das drahtlose Gerät nicht in der Lage ist, die Übertragung der zweiten Planungsanforderung simultan mit der Gerät-zu-Gerät-Übertragung durchzuführen, die Übertragung der zweiten Planungsanforderung gegenüber der Gerät-zu-Gerät-Kommunikation herabgestuft wird,
wobei die erste Planungsanforderung eine Planungsanforderung ist, die aufgrund des Fehlers ausgelöst wurde, und
wobei die zweite Planungsanforderung eine Planungsanforderung ist, die nicht aufgrund des Fehlers ausgelöst wurde.

2. Verfahren nach Anspruch 1, wobei mindestens eine der Ressourcen für die Übertragung der ersten Planungsanforderung oder der Ressourcen für die Übertragung der zweiten Planungsanforderung einen physikalischen Steuerkanal für den Uplink umfasst, und
wobei die Ressource für die Übertragung der Gerät-zu-Gerät-Übertragung einen gemeinsamen Kanal für die Gerät-zu-Gerät-Übertragung umfasst.

3. Verfahren nach Anspruch 1, wobei das Erkennen (S1507, S1607) des Fehlers umfasst:
Zählen einer Anzahl von Strahlausfallereignissen, wobei jedes Strahlausfallereignis auf der Grundlage festgestellt wird, dass die Leistung des über den bedienenden Strahl empfangenen Referenzsignals unter den Schwellenwert fällt; und
Erkennen des ersten Fehlers auf der Grundlage, dass die gezählte Anzahl von Strahlausfallereignissen eine vom Netzwerk konfigurierte Schwellenanzahl erreicht,
wobei der erste Fehler ein Strahlausfall ist.

4. Verfahren nach Anspruch 3, das ferner umfasst:
Auslösen einer Strahlausfall-Wiederherstellung auf der Grundlage, dass der Strahlausfall erkannt wurde und eine bedienende Zelle des drahtlosen Geräts, auf der der Strahlausfall erkannt wurde, eine sekundäre Zelle ist,
wobei das Auslösen der ersten Planungsanforderung umfasst:
Auslösen der ersten Planungsanforderung für den Strahlausfall, während die ausgelöste Strahlausfall-Wiederherstellung noch aussteht.

5. Verfahren nach Anspruch 1, wobei das Erkennen (S1507, S1607) des Fehlers umfasst:
Zählen einer Anzahl von Listen-before-talk-Fehlerinstanzen, wobei jede Listen-before-talk-Fehlerinstanz auf der Grundlage der Belegung des Kanals erkannt wird; und
Erkennen des zweiten Fehlers auf der Grundlage, dass die gezählte Anzahl von Listen-before-talk-Fehlerinstanzen eine vom Netzwerk konfigurierte Schwellenanzahl erreicht,
wobei der zweite Fehler ein Listen-before-Talk-Fehler ist.

6. Verfahren nach Anspruch 5, das ferner umfasst:
Auslösen eines konsistenten Listen-before-talk-Fehlers auf der Grundlage des erkannten Listen-before-talk-Fehlers,
wobei das Auslösen (S1513, S1613) der ersten Planungsanforderung umfasst:
Auslösen (S1513, S1613) der ersten Planungsanforderung für den Listen-before-talk-Fehler, während der ausgelöste konsistente Listen-before-talk-Fehler noch aussteht.

7. Verfahren nach Anspruch 1, das ferner umfasst:
Senden der ersten Planungsanforderung an das Netzwerk;
Empfangen einer Uplink-Zuweisung von dem Netzwerk; und
Senden von Informationen, die den Fehler auf der Grundlage der Uplink-Zuweisung mitteilen, an das Netzwerk.

8. Verfahren nach Anspruch 7, wobei die den Fehler mitteilenden Informationen über ein Steuerelement einer Medienzugriffssteuerungsschicht übertragen werden.

9. Verfahren nach Anspruch 1, wobei die Übertragung der ersten Planungsanforderung gegenüber der Gerät-zu-Gerät-Übertragung priorisiert wird (S1517, S1617), basierend darauf, dass sich die Ressource für die Übertragung der ersten Planungsanforderung nicht mit einer Ressource für eine physikalische Uplink-Shared-Channel-Übertragung in einem Zufallszugriffsverfahren überschneidet.

10. Verfahren nach Anspruch 1, wobei die Übertragung der ersten Planungsanforderung auf einer bestimmten Zelle gegenüber der Gerät-zu-Gerät-Übertragung auf einem bestimmten Träger priorisiert wird (S1517, S1617).

11. Verfahren nach Anspruch 10, das ferner umfasst:
Empfangen von Informationen aus dem Netzwerk, die zumindest entweder die spezifische Zelle oder den spezifischen Träger angeben.

12. Verfahren nach Anspruch 1, wobei das drahtlose Gerät mit mindestens einem von einem Benutzergerät, einem Netzwerk oder autonomen Fahrzeugen, die nicht das drahtlose Gerät sind, in Kommunikation steht.

13. Vorrichtung (210), die dazu ausgelegt ist, ein Verfahren nach einem der Ansprüche 1 bis 12 auszuführen.

## Revendications

1. Procédé exécuté par un dispositif sans fil dans un système de communication sans fil, le procédé comprenant:
la détection (S1507, S1607) d'une défaillance comprenant au moins l'une parmi une première défaillance ou une deuxième défaillance, la première défaillance étant détectée lorsque la puissance d'un signal de référence reçu par l'intermédiaire d'un faisceau de desserte passe en dessous d'un niveau seuil, et la deuxième défaillance étant détectée lorsqu'un canal est occupé;
le déclenchement (S1513, S1613) d'une première demande de planification dès la détection de la défaillance; et
sur la base i) d'une ressource destinée à la transmission de la première demande de planification qui chevauche une ressource destinée à une transmission de dispositif à dispositif, et ii) étant donné que le dispositif sans fil ne peut pas effectuer la transmission de la première demande de planification simultanément avec la transmission de dispositif à dispositif, la priorisation (S1517, S1617) de la transmission de la première demande de planification par rapport à la transmission de dispositif à dispositif,
dans lequel sur la base i) d'une ressource destinée à la transmission de la deuxième demande de planification qui chevauche la ressource destinée à la transmission de dispositif à dispositif, et ii) étant donné que le dispositif sans fil ne peut pas effectuer la transmission de la deuxième demande de planification simultanément avec la transmission de dispositif à dispositif, la transmission de la deuxième demande de planification n'est pas prioritaire par rapport à la transmission de dispositif à dispositif,
dans lequel la première demande de planification est une demande de planification déclenchée par la défaillance, et
dans lequel la deuxième demande de planification est une demande de planification qui n'a pas été déclenchée par la défaillance.

2. Procédé selon la revendication 1, dans lequel au moins l'une parmi la ressources destinée à la transmission de la première demande de planification ou la ressource destinée à la transmission de la deuxième demande de planification comprend un canal physique de commande de liaison montante, et
dans lequel la ressource destinée à la transmission de dispositif à dispositif comprend un canal partagé pour la transmission de dispositif à dispositif.

3. Procédé selon la revendication 1, dans lequel la détection (S1507, S1607) de la défaillance consiste à:
compter un nombre d'occurrences de défaillance de faisceau, chaque occurrence de défaillance de faisceau étant détectée lorsque la puissance du signal de référence reçu par le faisceau de desserte passe en dessous du seuil; et
détecter la première défaillance lorsque le nombre compté d'occurrences de défaillance de faisceau atteint un seuil configuré par le réseau,
dans lequel la première défaillance est une défaillance de faisceau.

4. Procédé selon la revendication 3, comprenant en outre:
le déclenchement d'une procédure de reprise sur défaillance de faisceau, étant donné que la défaillance de faisceau a été détectée et que la cellule de desserte du dispositif sans fil sur laquelle la défaillance de faisceau a été détectée est une cellule secondaire,
dans lequel le déclenchement de la première demande de planification consiste à:
déclencher la première demande de planification relative à la défaillance du faisceau tandis que la procédure de reprise sur défaillance déclenchée suite est en attente.

5. Procédé selon la revendication 1, dans lequel la détection (S1507, S1607) de la défaillance consiste à:
compter un nombre d'instances de défaillance d'accès multiple avec écoute de porteuse, chaque instance de défaillance d'accès multiple avec écoute de porteuse étant détectée lorsque le canal est occupé; et
détecter la deuxième défaillance lorsque le nombre compté d'instances de défaillance d'accès multiple avec écoute de porteuse atteint un seuil configuré par le réseau,
dans lequel la deuxième défaillance est une défaillance d'accès multiple avec écoute de porteuse.

6. Procédé selon la revendication 5, comprenant en outre:
le déclenchement d'une défaillance d'accès multiple avec écoute de porteuse récurrente lorsque la défaillance d'accès multiple avec écoute de porteuse est détectée,
dans lequel le déclenchement (S1513, S1613) de la première demande de planification consiste à:
le déclenchement (S1513, S1613) de la première demande de planification pour la défaillance d'accès multiple avec écoute de porteuse tandis que la défaillance d'accès multiple avec écoute de porteuse échec est en attente.

7. Procédé selon la revendication 1, comprenant en outre:
la transmission de la première demande de planification au réseau;
la réception d'une attribution de liaison montante provenant du réseau; et
la transmission, au réseau, des informations indiquant la défaillance sur la base de l'attribution de liaison montante.

8. Procédé selon la revendication 7, dans lequel les informations signalant la défaillance sont transmises par l'intermédiaire d'un élément de commande d'une couche de contrôle d'accès au support.

9. Procédé selon la revendication 1, dans lequel la transmission de la première demande de planification est priorisée (S1517, S1617) par rapport à la transmission de dispositif à dispositif, étant donné que la ressource destinée à la transmission de la première demande de planification ne chevauche pas une ressource destinée à une transmission de canal physique partagé de liaison montante dans le cadre d'une procédure d'accès aléatoire.

10. Procédé selon la revendication 1, dans lequel la transmission de la première demande de planification sur une cellule spécifique est priorisée (S1517, S1617) par rapport à la transmission de dispositif à dispositif sur une porteuse spécifique.

11. Procédé selon la revendication 10, comprenant en outre:
la réception, en provenance du réseau, d'informations indiquant au moins l'une parmi la cellule spécifique ou la porteuse spécifique.

12. Procédé selon la revendication 1, dans lequel le dispositif sans fil est en communication avec au moins l'un parmi un équipement utilisateur, un réseau ou des véhicules autonomes autres que le dispositif sans fil.

13. Appareil (210) conçu pour mettre en œuvre un procédé selon l'une quelconque des revendications 1 à 12.
